# FASCICULE DE BREVET EUROPEEN

(11) **EP 2 424 928 B1**
(45) Date de publication et mention de la délivrance du brevet: **25.09.2013**
(21) Numéro de dépôt: 10716342.0
(22) Date de dépôt: 30.04.2010
(51) Int. Cl.: C08J 7/16, C08J 7/12, C08J 7/14, C23C 18/20

(54) **PROCÉDÉ DE PRÉPARATION D'UN FILM ORGANIQUE À LA SURFACE D'UN SUPPORT SOLIDE AVEC TRAITEMENT OXYDANT**
VERFAHREN ZUR HERSTELLUNG EINES ORGANISCHEN FILMS AUF DER OBERFLÄCHE EINES FESTEN SUBSTRATS MIT OXIDATIONSBEHANDLUNG
METHOD FOR PREPARING AN ORGANIC FILM AT THE SURFACE OF A SOLID SUBSTRATE WITH OXIDIZING PROCESSING

(30) Priorité: 30.04.2009 FR 0952891; 15.01.2010 FR 1050279
(43) Date de publication de la demande: 07.03.2012
(73) Titulaire: Commissariat à l'Énergie Atomique et aux Énergies Alternatives, 75015 Paris (FR)
(72) Inventeur: BERTHELOT, Thomas, F-91940 Les Ulis (FR); GARCIA, Alexandre, F-94200 Ivry sur Seine (FR); ROUSSEL, Sébastien, F-91450 Soisy sur Seine (FR); NEKELSON, Fabien, Ikeda Osaka, 563-0026 (JP)
(74) Mandataire: Ilgart, Jean-Christophe
(86) Numéro de dépôt international: PCT/EP2010/055921
(87) Numéro de publication internationale: WO 2010/125190

(56) Documents cités:
- WO-A2-2008/078052
- SUN W ET AL: "Preparing polymer brushes on polytetrafluoroethylene films by free radical polymerization" APPLIED SURFACE SCIENCE, vol. 253, no. 2, 15 novembre 2006 (2006-11-15), pages 983-988, XP024893691 ELSEVIER, AMSTERDAM, NL ISSN: 0169-4332 DOI: 10.1016/J.APSUSC.2006.02.045 [extrait le 2006-11-15]
- Jittrawadee Phunkum: "A study to improve adhesion between surface grafted polyethylene and epoxy resin" 28 octobre 2005 (2005-10-28), Mahidol University , XP002586490 ISBN: 9740466753 3.2 Surface Modification page 5, alinéa 1 - page 14
- MEVELLEC V ET AL: "Grafting polymers on surfaces: A new powerful and versatile diazonium salt-based one-step process in aqueous media" CHEMISTRY OF MATERIALS, vol. 19, no. 25, 11 décembre 2007 (2007-12-11), pages 6323-6330, XP002586489 AMERICAN CHEMICAL SOCIETY US DOI: 10.1021/CM071371I

## Description

### DOMAINE TECHNIQUE

La présente invention concerne le domaine des revêtements organiques de surface, lesdits revêtements étant sous la forme de films organiques.

Elle est plus particulièrement relative à un procédé de préparation de tels revêtements organiques par enduction sur des surfaces conductrices ou non de l'électricité, avantageusement des surfaces en plastiques ou en polymères, avec une étape préalable de traitement oxydant des surfaces.

### ÉTAT DE LA TECHNIQUE ANTÉRIEURE

A l'heure actuelle, il existe plusieurs techniques permettant la réalisation de films organiques minces sur des substrats.

Certaines techniques applicables à tout type de surface ne nécessitent pas d'affinité entre le film et la surface revêtue et n'impliquent qu'une physisorption entre ces deux éléments. Parmi ces techniques, on trouve le procédé de formation d'un revêtement par centrifugation (« spin coating »), de formation d'un revêtement par immersion (« dip coating ») ou de dépôt par vaporisation (« spray coating»). Il n'existe aucun greffage effectif entre le film et la surface revêtue et les épaisseurs produites sont mal contrôlables notamment pour les dépôts les plus fins (inférieurs à 20 nm).

D'autres techniques de formation d'un revêtement organique à la surface d'un support, telles que le dépôt par plasma ou l'activation photochimique (ou photoactivation) reposent sur un même principe : générer à proximité de la surface à couvrir des formes instables d'un précurseur, qui évoluent en formant un film sur le substrat. Ces techniques donnent en général lieu à la formation de films adhérents, bien qu'il soit le plus souvent impossible de discerner si cette adhésion est due à une réticulation d'un film topologiquement fermé autour de l'objet ou à une réelle formation de liaisons à l'interface. De plus, ces méthodes nécessitent des précurseurs particuliers, notamment photosensibles pour la photoactivation, des prétraitements relativement complexes et coûteux, l'utilisation d'installations sous vide pour les méthodes plasma, l'irradiation, et/ou l'utilisation de potentiostats pour les méthodes électrochimiques auxquelles sont associés de nombreux problèmes de connexion.

La cataphorèse est une technique également employée pour le revêtement de surfaces conductrices par des films organiques. La cataphorèse ou procédé d'électrodéposition cationique, permet de recouvrir des pièces métalliques à l'aide de polymères chargés, synthétisés préalablement à leur dépôt, et donne accès à des films uniformes sur des surfaces conductrices. Toutefois, outre un contrôle strict des conditions de l'électrodéposition, le traitement nécessite une étape supplémentaire d'étuvage afin de conférer au film électrodéposé une résistance physique ou chimique.

L'auto-assemblage de monocouches est une technique très simple à mettre en oeuvre mais qui requiert l'utilisation de précurseurs généralement moléculaires possédant une affinité suffisante pour la surface d'intérêt à revêtir. On parlera alors de couple précurseur-surface tels les composés soufrés notamment présentant une fonction thiol ayant une affinité pour l'or ou l'argent, les tri-halogéno silanes pour les oxydes comme la silice ou l'alumine, les polyaromatiques pour le graphite ou les nanotubes de carbone. Dans tous les cas, la formation d'un film d'épaisseur moléculaire (moins de 10 nm) repose sur une réaction chimique spécifique entre une partie du précurseur moléculaire et certains sites « récepteurs » de la surface. Une réaction de chimisorption assure l'accrochage. Toutefois, la liaison d'interface entre la surface et le film monomoléculaire peut être fragile pour certains couples ou fragilisée par des conditions environnementales particulières notamment humides.

L'électrogreffage de polymères est une technique basée sur l'initiation puis la polymérisation, par propagation en chaîne, électro-induite de monomères électro-actifs sur la surface d'intérêt jouant à la fois le rôle d'électrode et celui d'amorceur de polymérisation **[1]**. L'électrogreffage requiert l'utilisation de précurseurs adaptés à son mécanisme d'initiation par réduction et de propagation. L'adhérence des films électrogreffés est assurée par une liaison covalente carbone-métal **[2]**. Parmi les différentes techniques rappelées précédemment, l'électrogreffage est la seule technique qui permette de produire des films greffés avec un contrôle spécifique de la liaison d'interface. En effet, la seule technique permettant de greffer des films de polymères issus de monomères vinyliques activés sur des surfaces, nécessairement conductrices, consiste à électro-initier la réaction de polymérisation à partir de la surface via un potentiostat, suivie d'une croissance dés chaînes, monomère par monomère nécessitant l'emploi d'une cellule électrochimique avec une cathode et une anode ainsi qu'une application d'une tension aux bornes de celles-ci. Ainsi, la demande internationale WO 03/018212 décrit notamment un procédé de greffage et de croissance d'un film organique conducteur sur une surface conductrice de l'électricité, le greffage et la croissance étant réalisés simultanément par électroréduction d'un sel de diazonium précurseur dudit film organique **[3]**.

Enfin, un procédé permettant de réaliser des revêtements organiques greffés, en conditions non-électrochimiques, facile à mettre en oeuvre sur tout type de surface a été récemment décrit. Ce procédé notamment décrit dans la demande internationale WO 2008/078052 implique un greffage chimique radicalaire qui permet un greffage covalent en une étape simple **[4]**.

Cette nouvelle technique également décrite dans l'article de Mévellec et al, 2007 (Chem. Mater., vol. 19, pages 6323-6330) met en oeuvre des entités moléculaires notamment issues de sels d'aryle clivables tels que des sels de diazonium possédant un électron non apparié pour former des liaisons de type liaison covalente avec la surface d'intérêt à greffer, lesdites entités moléculaires étant générées indépendamment de la surface sur laquelle elles sont destinées à être greffées. Ces entités moléculaires se greffent sur la surface et amorcent une réaction radicalaire impliquant notamment des monomères éthyléniques.

Les inventeurs ont poursuivi leurs travaux afin d'identifier tout moyen et/ou toute étape permettant encore d'améliorer le procédé décrit dans la demande internationale WO 2008/078052.

L'article de Sun et al, 2006 (Applied Surface Science, vol. 253, pages 983-988) décrit un procédé pour préparer des polymères à la surface de films de polytétrafluoroéthylène (PTFE). Ce procédé consiste à :
- soumettre la surface de PTFE à un traitement décapant à base de naphtalénide de sodium moyennant quoi les atomes de fluor à la surface du PTFE sont éliminés et remplacés essentiellement par des groupements hydroxyles ;
- utiliser ces groupements hydroxyles pour lier, de façon covalente, à la surface, via une réaction d'estérification, des amorceurs acide 4,4'-azobis (4-cyanopentanoïque), moyennant quoi la surface de PTFE est fonctionnalisée par des groupements de type -R-N=N-R' (azo-groupements) ;
- mettre en contact la surface ainsi fonctionnalisée avec une solution de monomères de méthyl méthacrylate avec du toluène comme solvant puis maintenir l'ensemble à 80°C, moyennant quoi des polymères de type poly(méthyl méthacrylate) (PMMA) sont obtenus à la surface du PTFE.

La thèse de Phunkum, 2005, « A study to improve adhesion between surface grafted polyethylene and epoxy resin » concerne un travail sur les modifications de surface en polyéthylène (PE) pour augmenter ses propriétés d'adhésion. Le travail exposé dans cette thèse consiste à étudier différents facteurs permettant d'améliorer l'adhésion entre du PE et une résine époxy. La technique choisie pour cette étude implique la fonctionnalisation du PE avec du polyacrylamide (PAAm) ou du poly(acide acrylique) (PAA) en deux étapes, la première étape consistant à générer des groupements hydroxyles à la surface du PE avec une solution aqueuse de persulfate de potassium et la seconde à faire réagir le PE hydroxylé avec les monomères précités en présence de nitrate d'ammonium cérique et d'acide nitrique.

### EXPOSÉ DE L'INVENTION

Ainsi, la présente invention concerne un procédé amélioré pour greffer, dans des conditions non électrochimiques, sur au moins une partie de la surface d'un support solide, un film organique.

En effet, les travaux des inventeurs ont montré qu'un pré-traitement oxydant de la surface d'un support solide permet d'améliorer le greffage d'un film organique et/ou d'augmenter l'épaisseur et donc la quantité de film organique greffé sur ladite partie dans un procédé tel que décrit dans la demande internationale WO 2008/078052 **[4]**. Un tel traitement oxydant s'applique, plus particulièrement, à la surface d'un support solide et/ou à un support solide en polymère tel qu'un plastique.

Sans vouloir être tenu par une quelconque théorie, l'utilisation d'un pré-traitement oxydant permet une meilleure accroche du procédé tel que décrit dans la demande internationale WO 2008/078052 **[4]**. De plus, de par une plus grande réactivité de la surface à greffer, l'utilisation d'un pré-traitement oxydant permet d'abaisser les temps de réaction habituels du procédé tel que décrit dans la demande internationale WO 2008/078052 **[4]**.

Ainsi, la présente invention concerne un procédé de préparation d'un film organique sur une partie de la surface d'un support solide en (co)polymère, caractérisé en ce qu'il comprend les étapes successives consistant à :
i) soumettre ladite partie de surface à un traitement oxydant ;
ii) greffer sur ladite partie de surface, par greffage chimique radicalaire, un film organique, ce procédé étant tel que défini dans la revendication 1.

Par « surface d'un support solide en (co)polymère », on entend aussi bien un support solide en (co)polymère ou un support solide dont seule la surface est en (co)polymère, le reste du support pouvant être en un quelconque matériau. Le support solide selon la présente invention peut avoir n'importe quelles taille et forme.

Par « en (co)polymère », on entend dans le cadre de la présente invention un support ou une surface essentiellement constitué(e) par un seul (co)polymère ou plusieurs (co)polymères différents.

Par « essentiellement constitué(e) », on entend dans le cadre de la présente invention un support ou une surface dont au moins 50%, au moins 60%, au moins 70%, au moins 80%, au moins 90%, au moins 95% et/ou au moins 98% des constituants exprimés en poids sont un (ou plusieurs) (co)polymère(s).

Avantageusement, le support ou la surface du support est uniquement constitué(e) par un (ou plusieurs) (co)polymère(s).

En variante, le support ou la surface du support comprend, en plus d'un (ou plusieurs) (co)polymère(s), au moins un élément choisi dans le groupe constitué par les charges, les plastifiants et les additifs. Ce (ou ces) élément(s) additionnel(s) est(sont) avantageusement incorporé(s) et/ou dispersé(s) dans le matériau polymère.

Pour rappel, un plastique ou matière plastique est formé(e) d'au moins un (co)polymère avantageusement présentant un degré de polymérisation supérieur à 3000 et d'au moins un additif. Par conséquent, le support ou la surface du support en polymère mis(e) en oeuvre dans le cadre de la présente invention comprend les supports ou les surfaces de support en plastique ou en matière plastique.

Les charges minérales telles que silice, talc, fibres ou billes de verre ou organiques telles que farine céréalière ou pâte de cellulose sont généralement utilisées pour réduire le coût et améliorer certaines propriétés telles que les propriétés mécaniques du matériau polymère. Les additifs sont principalement utilisés pour améliorer une propriété spécifique du matériau polymère, ladite propriété pouvant être la réticulation, le glissement, la résistance à la dégradation, au feu et/ou aux attaques bactériennes et fongiques.

Tout polymère naturel (comme le latex ou le caoutchouc), artificiel, synthétique, thermoplastique, thermodurcissable, thermostable, élastomère, linéaire (i.e. monodimensionnel, linéaire ou ramifié) et/ou tridimensionnel est utilisable dans le cadre de la présente invention.

Avantageusement, le (co)polymère mis en oeuvre dans le cadre de la présente invention est un (co)polymère thermoplastique choisi dans le groupe constitué par :
- une polyoléfine telle qu'un polyéthylène, un polypropylène, un copolymère éthylène/propylène, un polybutylène, un polyméthylpentène, un copolymère éthylène/acétate vinylique, un copolymère éthylène/alcool vinylique, un(e) de leurs dérivés, de leurs copolymères, de leurs mélanges et de leurs combinaisons ;
- un polyester tel qu'un polyéthylène téréphthalate (PET) éventuellement modifié par du glycol, un polybutylène téréphthalate, un polylactide, un polycarbonate, un(e) de leurs copolymères, de leurs mélanges et de leurs combinaisons ;
- un polyéther tel qu'un poly(oxyméthylène), un poly(oxyéthylène), un poly(oxypropylène), un poly(phénylène éther), un(e) de leurs copolymères, de leurs mélanges et de leurs combinaisons ;
- un polymère vinylique tel qu'un poly(chlorure de vinyle) éventuellement chloré, un poly(alcool vinylique), un poly(acétate de vinyle), un poly(acétal de vinyle), un poly(formal de vinyle), un poly(fluorure de vinyle), un poly(chlorure de vinyle/acétate de vinyle), un(e) de leurs copolymères, de leurs mélanges et de leurs combinaisons ;
- un polymère vinylidénique tel qu'un poly(chlorure de vinylidène), un poly(fluorure de vinylidène), un(e) de leurs copolymères, de leurs mélanges et de leurs combinaisons ;
- un polymère styrénique tel qu'un polystyrène, un poly(styrène/butadiène), un poly(acrylonitrile/butadiène/styrène) (ABS), un acrylonitrile butadiène styrène/polycarbonate (ABS/PC), un poly(acrylonitrile/styrène), un poly(acrylonitrile/éthylène/propylène/styrène), un poly(acrylonitrile/styrène/acrylate), un(e) de leurs copolymères, de leurs mélanges et de leurs combinaisons ;
- un polymère (méth)acrylique tel qu'un polyacrylonitrile, un poly(acrylate de méthyle), un poly(méthacrylate de méthyle), un(e) de leurs dérivés, de leurs copolymères, de leurs mélanges et de leurs combinaisons ;
- une polyamide telle qu'un poly(caprolactame), un poly(hexaméthylène adipamide), un poly(lauroamide), un polyéther-bloc-amide, un poly(métaxylylène adipamide), un poly(métaphénylène isophtalamide), un(e) de leurs copolymères, de leurs mélanges et de leurs combinaisons ;
- un polymère fluoré (ou polyfluoréthène) tel qu'un polytétrafluoroéthylène, un polychlorotrifluoroéthylène, un poly(éthylène/propylène) perfluoré, un poly(fluorure de vinylidène) (PVDF), un(e) de leurs copolymères [tels que les copolymères de tétrafluoroéthylène et de tétrafluoropropylène (FEP), les copolymères d'éthylène et de tétrafluoroéthylène (ETFE), les copolymères d'hexafluoropropène et de fluorure de vinylidène (HFP-co-VDF), de fluorure de vinylidène et de trifluoroéthylène (VDF-co-TrFE) et de fluorure de vinylidène, de trifluoroéthylène et de monochlorotrifluoroéthylène (VDF-co-TrFE-co-chloro-TrFE)], de leurs mélanges et de leurs combinaisons ;
- un polymère cellulosique tel qu'un acétate de cellulose, un nitrate de cellulose, une méthylcellulose, un carboxyméthylcellulose, un(e) de leurs copolymères, de leurs mélanges et de leurs combinaisons ;
- un poly(arylènesulfone) tel qu'un polysulfone, un polyéthersulfone, un polyarylsulfone, un(e) de leurs copolymères, de leurs mélanges et de leurs combinaisons ;
- un polysulfure tel que du poly(sulfure de phénylène) ;
- un poly(aryléther)cétone tel qu'un poly(éther cétone), un poly(éther éther cétone), un poly(éther cétone cétone), un(e) de leurs copolymères, de leurs mélanges et de leurs combinaisons ;
- une polyamide-imide ;
- une poly(éther)imide ;
- une polybenzimidazole ;
- un poly(indène/coumarone) ;
- un poly(paraxylylène) ;
- un de leurs copolymères, un de leurs mélanges et une de leurs combinaisons.

En variante, le (co)polymère mis en oeuvre dans le cadre de la présente invention est un (co)polymère thermodurcissable choisi dans le groupe constitué par un aminoplaste tel que de l'urée-formol, de la mélanine-formol, de mélanine-formol/polyesters, un(e) de leurs copolymères, de leurs mélanges et de leurs combinaisons ; un polyuréthane ; un polyester insaturé ; un polysiloxane ; une résine formophénolique, époxyde, allylique ou vinylester ; un alkyde ; une polyurée ; un polyisocyanurate ; un poly(bismaléimide) ; un polybenzimidazole ; un polydicyclopentadiène ; un de leurs copolymères, un de leurs mélanges et une de leurs combinaisons.

De même, la présente invention peut être mise en oeuvre en utilisant des (co)polymères porteurs de groupements basiques comme des amines tertiaire ou secondaire et par exemple les pyridines, comme les poly-4 et poly-2-vinylpyridines (P4VP et P2VP) ou plus généralement des polymères porteurs de groupements aromatiques et aromatiques nitrés.

Des informations complémentaires sur les polymères utilisables dans le cadre de la présente invention sont accessibles dans l'article de Naudin, 1995 **[5]**.

Par « traitement oxydant », on entend dans le cadre de la présente invention un traitement (ou pré-traitement) visant à oxyder la surface du support solide mis en oeuvre et/ou à préparer la surface à une future oxydation par formation de radicaux. Une oxydation modifie la surface du support solide notamment en y fixant et/ou en y introduisant des groupements riches en oxygène tels que des groupements de type carboxylique (-COOH), hydroxyle (-OH), alcoxyle (-OR avec R tel que défini ci-après), carbonyle (-C=O), percarbonique (-C-O-OH) et parfois amide (-CONH).

Ce traitement repose sur l'utilisation de divers réactifs afin de créer en surface du polymère constituant la surface du support solide et/ou le support solide, une oxydation de surface et/ou afin de préparer cette surface à une oxydation de surface par formation de radicaux. L'oxydation ainsi obtenue permet une meilleure accroche et/ou une plus grande quantité de polymère greffé par le procédé tel que décrit dans la demande internationale WO 2008/078052 **[4]**. Ce traitement repose sur deux grands types de modifications de surface fondés sur des traitements physiques ou des traitements chimiques.

Dans une première forme de mise en oeuvre de la présente invention, le traitement oxydant utilisé est un traitement oxydant chimique. Avantageusement, un tel traitement oxydant chimique est choisi dans le groupe constitué par une réaction chimique de Fenton, un traitement à la potasse alcoolique, un traitement par un acide fort, un traitement à la soude, un traitement par un oxydant fort, un traitement à l'ozone et leurs combinaisons.

Par « combinaisons », il est envisagé que le traitement oxydant chimique mette en oeuvre au moins deux des traitements précédemment listés. A titre d'exemple, une telle combinaison peut consister en un traitement avec un oxydant fort suivi d'une réaction chimique de Fenton.

Par « réaction chimique de Fenton », on entend la réaction décrite par Fenton en 1894 qui permet de produire des radicaux hydroxyles par réaction de l'eau oxygénée avec du fer(II), représentée par le schéma réactionnel suivant :

Fe²⁺ + H₂O₂ → Fe³⁺ + OH + OH⁻

Dans le cadre de la présente invention, la réaction chimique de Fenton consiste à mettre en contact la surface du support solide et/ou le support solide avec une solution comprenant des ions ferreux (Fe²⁺) et un composé de formule ROOR dans laquelle R représente un hydrogène, un groupe alkyle comprenant de 1 à 15 atomes de carbone, un groupe acyle -COR' avec R' représentant un groupe alkyle comprenant de 1 à 15 atomes de carbone ou un groupe aroyle -COAr avec Ar représentant un groupe aromatique comprenant de 6 à 15 atomes de carbone. Des radicaux ^{.}OR avec R tel que précédemment défini sont obtenus par coupure du peroxyde ROOR par les ions Fe²⁺.

Par « groupe alkyle comprenant de 1 à 15 atomes de carbone », on entend un groupe alkyle, linéaire, ramifié ou cyclique, éventuellement substitué, comprenant de 1 à 15 atomes de carbone, notamment de 1 à 10 atomes de carbone et, en particulier, de 2 à 6 atomes de carbone et éventuellement un hétéroatome tel que N, O, F, Cl, P, Si, Br ou S.

Par « groupe aromatique comprenant de 6 à 15 atomes de carbone », on entend, dans le cadre de la présente invention, un groupe aromatique ou hétéroaromatique, éventuellement substitué, constitué d'un ou plusieurs cycles aromatiques ou hétéroaromatiques comportant chacun de 3 à 10 atomes, le ou les hétéroatomes pouvant être N, O, P ou S.

Par « substitué », on entend, dans le cadre de la présente invention, un groupe alkyle ou aromatique, mono- ou poly-substitué, par un groupe alkyle, linéaire ou ramifié, comprenant de 1 à 4 atomes de carbone, par un groupe amine, par un groupe carboxylique et/ou par un groupe nitro.

Les ions ferreux (Fe²⁺) sont présents dans la solution comprenant des ions ferreux (Fe²⁺) et un composé de formule ROOR à une concentration avantageusement comprise entre 0,05 M et 5 M, notamment, entre 0,1 M et 3 M et, en particulier, entre 0,25 M et 2 M. La solution comprenant des ions ferreux (Fe²⁺) et un composé de formule ROOR comprend en outre des contre-ions tels que tétrafluoroborate, sulfate ou chlorure.

Le composé de formule ROOR est présent dans la solution comprenant des ions ferreux (Fe²⁺) et un composé de formule ROOR à une concentration comprise entre 0,1 M et 5 M, notamment, entre 0,5 M et 3 M et, en particulier, entre 1 M et 2,5 M.

La solution comprenant des ions ferreux (Fe²⁺) et un composé de formule ROOR est avantageusement une solution acide. Par "solution acide", on entend une solution dont le pH est inférieur à 7, notamment compris entre 2 et 4 et, en particulier, de l'ordre de 3 (i.e. 3 ± 0,5). Cette solution comprend en outre de l'acide sulfurique et notamment à une concentration comprise entre 0,05 mM et 50 mM, en particulier, entre 0,1 mM et 10 mM et, plus particulièrement, de l'ordre de 1 mM (i.e. 1 mM ± 0,25 mM).

La durée du traitement par réaction chimique de Fenton peut être variable. A titre d'exemples non limitatifs, cette durée est avantageusement comprise entre 5 min et 5 h, notamment entre 10 min et 3 h, en particulier, entre 15 min et 2 h et, plus particulièrement, de l'ordre de 25 min (i.e. 25 ± 5 min).

Un traitement à la potasse alcoolique consiste à mettre en contact la surface du support solide et/ou le support solide avec une solution de potasse alcoolique.

Par « solution de potasse alcoolique », on entend de la potasse ou hydroxyde de potassium dilué(e) dans une solution contenant comme solvant un alcool ci-après désignée solution alcoolique. Avantageusement, cet alcool est choisi dans le groupe constitué par le méthanol, l'éthanol et le propanol. Cet alcool est, de façon préférée, de l'éthanol.

La concentration en KOH dans la solution alcoolique est comprise entre 0,1 M et 10 M, notamment entre 0,5 M et 5 M et, en particulier, de l'ordre de 3,5 M (i.e. 3,5 M ± 0,5 M).

La durée du traitement à la potasse alcoolique peut être variable. A titre d'exemples non limitatifs, cette durée est avantageusement comprise entre 5 min et 5 h, notamment entre 10 min et 3 h et, en particulier, entre 20 min et 2 h.

Le traitement à la potasse alcoolique est, plus particulièrement, adapté pour les polymères fluorés tels que le PVDF. En effet, leur oxydation par une solution de potasse alcoolique conduit à une défluorination de la surface du polymère en créant des liaisons -CH=CF- et leur équivalent oxydées. Ces liaisons sont réactives en raison de la présence de l'atome de fluor.

Un traitement par un acide fort consiste à mettre en contact la surface du support solide et/ou le support solide avec une solution d'acide fort ou d'un mélange d'acides forts. Un tel traitement augmente le nombre de groupements oxygénés par oxydation de surface.

Tout acide fort est utilisable dans le cadre d'un traitement oxydant par un acide fort selon la présente invention. A titre d'exemples non limitatifs, l'acide fort est avantageusement choisi dans le groupe constitué par HCl, H₂SO₄, HNO₃, HClO₄ et leurs mélanges.

Le rapport massique en acide fort de la solution d'acide(s) fort(s) peut être variable. A titre d'exemples non limitatifs, cette concentration est avantageusement comprise entre 10 et 100% massique, notamment entre 50 et 95% massique et, en particulier, entre 70 et 90% massique.

La durée du traitement à l'acide fort peut être variable. A titre d'exemples non limitatifs, cette durée est avantageusement comprise entre 1 min et 5 h, notamment entre 1 min et 3 h et, en particulier, entre 1 min et 1 h.

Un traitement à la soude consiste à mettre en contact la surface du support solide et/ou le support solide avec une solution de soude.

Le rapport massique en soude de la solution peut être variable. A titre d'exemples non limitatifs, cette concentration est avantageusement comprise entre 10 et 100% massique, notamment entre 15 et 70% massique et, en particulier, entre 20 et 50% massique.

La durée du traitement à la soude peut être variable. A titre d'exemples non limitatifs, cette durée est avantageusement comprise entre 1 min et 5 h, notamment entre 1 min et 3 h et, en particulier, entre 1 min et 1 h.

Un traitement par un oxydant fort consiste à mettre en contact la surface du support solide et/ou le support solide avec une solution d'un oxydant fort. Cette solution d'un oxydant fort peut être neutre, acide ou basique.

Avantageusement, cette solution est acide. Plus particulièrement, l'oxydant fort est choisi dans le groupe constitué par du KMnO₄, K₂Cr₂O₇, KClO₃, CrO₃ et leurs mélanges, dans l'acide chlorhydrique, l'acide sulfurique ou dans l'acide nitrique. On envisage donc, comme solutions d'oxydant fort, KMnO₄/HCl K₂Cr₂O₇/HCl, KClO₃/HCl, CrO₃/HCl, KMnO₄/H₂SO₄, K₂Cr₂O₇/H₂SO₄, KClO₃/H₂SO₄, CrO₃/H₂SO₄, KMnO₄/HNO₃, K₂Cr₂O₇/HNO₃, KClO₃/HNO₃ et CrO₃/HNO₃.

La concentration en KMnO₄ K₂Cr₂O₇, KClO₃ ou CrO₃ dans l'acide chlorhydrique, dans l'acide sulfurique ou dans l'acide nitrique est avantageusement comprise entre 10 mM et 1 M, notamment entre 0,1 M et 0,5 M et, en particulier, de l'ordre de 0,2 M (i.e. 0,2 M ± 50 mM).

La concentration en acide chlorhydrique, en acide sulfurique ou en acide nitrique dans la solution d'oxydant fort est avantageusement comprise entre 0,1 M et 10 M, notamment entre 0,5 M et 5 M et, en particulier, de l'ordre de 3,5 M (i.e. 3,5 M ± 0,5 M).

La durée du traitement par un oxydant fort peut être variable. A titre d'exemples non limitatifs, cette durée est avantageusement comprise entre 1 min et 3 h, notamment entre 5 min et 1 h, en particulier, entre 10 min et 30 min et, plus particulièrement, de l'ordre de 15 min (i.e. 15 min ± 5 min).

Un traitement à l'ozone consiste à exposer la surface du support solide et/ou le support solide à de l'ozone. Cette exposition peut impliquer soit la mise en contact de la surface du support solide et/ou du support solide avec un flux d'ozone, soit la disposition de la surface du support solide et/ou du support solide dans une atmosphère contenant de l'ozone.

L'ozone nécessaire peut être obtenue, à partir d'un gaz riche en oxygène tel que de l'air, de l'oxygène, de l'air enrichi en oxygène ou un gaz enrichi en oxygène, via un générateur d'ozone tel qu'un UVO-Cleaner Model 42-200 à lampe à vapeur de mercure basse pression (28 mW/cm², 254 nm).

La durée du traitement à l'ozone peut être variable. A titre d'exemples non limitatifs, cette durée est avantageusement comprise entre 30 sec et 3 h, notamment entre 1 min et 1 h, en particulier, entre 5 min et 30 min et, plus particulièrement, de l'ordre de 10 min (10 min ± 3 min).

Le traitement oxydant chimique peut consister en un pré-traitement électrochimique. Un tel traitement qui consiste à immerger le substrat à oxyder dans une solution oxydante générée électrochimiquement est notamment décrit dans l'article de Brewis et Dahm, 2001 **[6]**. La demande internationale WO 2007/042659 décrit également un tel pré-traitement électrochimique, désigné dans ce document, par ElectroFenton **[7]**.

Dans une seconde forme de mise en oeuvre de la présente invention, le traitement oxydant utilisé est un traitement oxydant physique. Ce traitement oxydant physique consiste en un traitement par voie sèche qui a pour but d'oxyder directement la surface ou de préparer cette surface à une future oxydation par formation de radicaux. Dans le cas de certains traitements par voie sèche, il n'y a pas forcément directement augmentation du nombre d'oxydation de la surface. En effet, cette augmentation du nombre d'oxydation peut n'avoir leu qu'après une immersion en solution aqueuse de la surface traitée. Avantageusement, un tel traitement oxydant physique est choisi dans le groupe constitué par un traitement à la flamme, un traitement par l'effet corona, un traitement par plasma, un traitement aux UV, un traitement aux rayons X ou γ, un traitement par irradiation aux électrons ou aux ions lourds et leurs combinaisons.

Par « combinaisons », il est envisagé que le traitement oxydant physique mette en oeuvre au moins deux des traitements précédemment listés.

De plus, dans le cadre de la présente invention, au moins un traitement oxydant chimique tel que précédemment défini et au moins un traitement oxydant physique tel que précédemment défini peuvent être combinés pour traiter la surface du support solide.

Le traitement par flamme ou « flammage » consiste à exposer la surface du support solide et/ou le support solide à une flamme. La flamme est notamment disposée à une distance de la surface du support solide et/ou du support solide comprise entre 0,1 cm et 20 cm, en particulier, entre 0,3 cm et 10 cm et, plus particulièrement, entre 0,5 cm et 5 cm.

Cette flamme est avantageusement générée par un mélange d'au moins deux gaz, le premier et le second gaz étant respectivement choisis dans le groupe constitué par l'hydrogène, le méthane, l'éthane et le propane et le groupe constitué par l'air, l'ozone et l'oxygène. La température de la flamme ainsi obtenue est comprise entre 500°C et 1600°C, notamment entre 800°C et 1400°C et, en particulier, de l'ordre de 1200°C (i.e. 1200°C ± 100°C).

Les hautes températures de ce traitement génèrent des espèces actives qui peuvent correspondre à des radicaux, des ions ou des molécules excitées. Leurs natures peuvent être des fonctions hydroxyles, carbonyles, carboxyles.

La durée du traitement par flamme est comprise entre 0,01 sec et 10 sec, notamment entre 0,015 sec et 1 sec, et, en particulier, entre 0,02 sec à 0,1 sec.

Le traitement par l'effet corona est aussi appelé « traitement par effet couronne » ou « traitement par décharge corona » consiste à exposer la surface du support solide et/ou le support solide à un champ d'ionisation créé en faisant passer un courant alternatif de haut voltage entre deux électrodes distantes de quelques mm et notamment de 1 mm à 2 mm. Ainsi, une décharge électrique entraînée par l'ionisation du milieu entourant un conducteur se produit lorsque le potentiel électrique dépasse une valeur critique mais que les conditions ne permettent pas la formation d'un arc.

Lors de cette ionisation, les électrons émis sont précipités dans le champ électrique et transmettent leur énergie aux molécules du milieu entourant la surface du support solide et/ou le support solide qui est avantageusement de l'air ou un gaz inerte éventuellement enrichi en oxygène. Cela entraîne une rupture de chaînes du (ou des) polymère(s) du support solide ainsi que des réactions spontanées avec les espèces chimiques présentes dans le milieu. Même si le traitement par l'effet corona se fait sous atmosphère inerte sans apport d'oxygène, une oxydation due aux impuretés provoque une oxydation de surface.

La densité de la décharge corona est avantageusement comprise entre 10 W.min/m² et 500 W.min/m², notamment entre 20 W.min/m² et 400 W.min/m² et, en particulier, entre 30 W.min/m² et 300 W.min/m²_{.}

La durée du traitement par l'effet corona est comprise entre 0,1 sec et 600 sec, notamment entre 1 sec et 120 sec, et, en particulier, entre 10 sec et 50 sec.

Le traitement par plasma consiste à exposer la surface du support solide et/ou le support solide à un plasma.

Pour rappel, le plasma est un gaz à l'état ionisé, classiquement considéré comme un quatrième état de la matière. On apporte l'énergie nécessaire à l'ionisation d'un gaz au moyen d'une onde électromagnétique (radio fréquence ou micro onde). Le plasma est composé de molécules neutres, d'ions, d'électrons, d'espèces radicalaires (chimiquement très actives) et d'espèces excitées qui vont réagir avec la surface des matériaux.

On distingue les plasmas dits « froids » et les plasmas dits « chauds » qui se distinguent les uns des autres vis-à-vis du taux d'ionisation des espèces contenues dans le plasma. Pour les plasmas dits « froids », le taux d'ionisation des espèces réactives est inférieur à 10⁻⁴ alors que pour les plasmas dits « chauds », il est supérieur à 10⁻⁴. Les termes « chauds » et « froids » viennent du fait que le plasma dit « chaud » est beaucoup plus énergétique que le plasma dit « froid ». Dans le cas d'un pré-traitement oxydant selon la présente invention, le plasma froid est plus adapté. Toutefois, que le plasma mis en oeuvre soit froid ou chaud, le traitement résulte dans les deux cas dans l'apparition en surface du support solide de fonctions riches en oxygène.

Le plasma est avantageusement généré par un mélange d'au moins deux gaz, le premier et le second gaz étant respectivement choisis dans le groupe constitué par les gaz inertes et le groupe constitué par l'air et l'oxygène.

La durée du traitement par plasma est comprise entre 1 sec et 5 min, notamment, entre 10 sec à 60 sec et, en particulier, entre 20 sec et 40 sec.

Le traitement aux UV consiste à soumettre la surface du support solide et/ou le support solide à une lumière UV.

Avantageusement, la lumière UV mise en oeuvre présente une longueur d'onde comprise entre 10 nm et 400 nm, notamment entre 100 nm et 380 nm et, en particulier, entre 180 nm et 360 nm.

Toute source UV est utilisable pour générer une telle lumière UV. A titre d'exemple, on peut citer une lampe UV, une lampe à mercure à basse pression, une lampe à mercure à moyenne pression, une lampe à mercure à haute pression, une lampe à mercure à très haute pression, une lampe à arc électrique, une lampe aux halogénures, une lampe au xénon, un laser, un laser excimère ArF, un laser excimère KrF, une lampe excimère ou un rayonnement synchroton.

Le traitement aux UV dans le cadre de la présente invention peut être réalisé à une température comprise entre 5°C et 120°C, notamment entre 10°C et 80°C et, en particulier, entre 15°C et 40°C. Plus particulièrement, le traitement aux UV selon l'invention est réalisé à température ambiante. Par « température ambiante », on entend une température de 20°C ± 5°C.

Ce traitement aux UV est avantageusement effectué sous gaz et notamment en présence d'un gaz riche en oxygène et/ou en ozone tel que de l'air, de l'oxygène, de l'ozone, de l'air enrichi en oxygène et/ou en ozone ou un gaz enrichi en oxygène et/ou en ozone. En effet, la photo-oxydation de la surface du support solide i.e. irradiation UV en présence d'oxygène et/ou d'ozone permet l'introduction d'oxygène en surface du matériau polymère constituant ledit support solide.

Le traitement aux UV dans le cadre de la présente invention dure de 1 min à 5 h, notamment de 5 min à 1 h et, en particulier, de 10 min à 45 min. L'irradiation peut être unique ou être répétée plusieurs fois, notamment de 2 à 20 fois et en particulier, de 3 à 10 fois.

Le traitement aux rayons X ou γ consiste à soumettre la surface du support solide et/ou le support solide à une radiation X ou γ (i.e. un rayonnement électromagnétique).

Avantageusement, la radiation X mise en oeuvre présente une longueur d'onde inférieure à 5 pm et la radiation γ mise en oeuvre présente une longueur d'onde comprise entre 5 pm et 10 nm.

Toute source permettant de générer une radiation X ou γ, apte à la diriger vers la surface du support solide selon l'invention et connue de l'homme du métier est utilisable dans le cadre de la présente invention. A titre d'exemple, les radiations γ peuvent être émises par une source radioactive telle que du cobalt 60 ou du césium 137 contenue dans une installation gamma.

Le traitement aux rayons X ou γ dans le cadre de la présente invention peut être réalisé à une température comprise entre 5°C et 120°C, notamment entre 10°C et 80°C et, en particulier, entre 15°C et 40°C. Plus particulièrement, le traitement aux rayons X ou γ selon l'invention est réalisé à température ambiante. Par « température ambiante », on entend une température de 20°C ± 5°C.

Ce traitement aux rayons X ou γ est avantageusement effectué en présence d'un gaz riche en oxygène tel que de l'air, de l'oxygène, de l'air enrichi en oxygène ou un gaz enrichi en oxygène. En effet, même si la très grande énergie des photons émis leur permet de traverser la matière, la présence d'oxygène lors de l'irradiation induit la formation de radicaux à la surface du polymère (i.e. à la surface du support solide). Ces radicaux réagissent alors avec l'oxygène ambiant pour former des fonctions riches en oxygène à la surface du support solide.

La durée du traitement aux rayons X ou γ est comprise entre 1 min et 2 h, notamment entre 5 min et 1 h, et, en particulier, entre 10 min et 30 min.

Le traitement par irradiation aux électrons ou aux ions lourds consiste à soumettre la surface du support solide et/ou le support solide à un faisceau d'électrons (également appelé « irradiation électronique ») ou à un bombardement par des ions lourds.

L'étape consistant à soumettre la surface du support solide et/ou le support solide à un faisceau d'électrons peut consister à balayer la surface du support solide et/ou le support solide avec un faisceau d'électrons accélérés, ce faisceau pouvant être émis par un accélérateur d'électrons (par exemple, un accélérateur Van de Graaf, 2,5 MeV). La dose de l'irradiation électronique peut varier de 5 kGy à 1000 kGy, notamment de 10 kGy à 500 kGy et, en particulier, de 50 kGy à 150 kGy.

Par « ions lourds », on entend des ions, dont la masse est supérieure à celle du carbone. Généralement, il s'agit d'ions choisis parmi le krypton, le plomb et le xénon. Cette étape peut consister à bombarder la surface du support solide et/ou le support solide avec un faisceau d'ions lourds, tel qu'un faisceau d'ions Pb ou un faisceau d'ions Kr. L'intensité du faisceau d'ions est avantageusement comprise entre 0,1 MeV/mau et 100 MeV/mau, notamment entre 1 MeV/mau et 50 MeV/mau et, en particulier, entre 4 MeV/mau et 20 MeV/mau.

Le traitement par irradiation aux électrons ou aux ions lourds dans le cadre de la présente invention peut être réalisé à une température comprise entre 5°C et 120°C, notamment entre 10°C et 80°C et, en particulier, entre 15°C et 40°C. Plus particulièrement, le traitement par irradiation aux électrons ou aux ions lourds selon l'invention est réalisé à température ambiante. Par « température ambiante », on entend une température de 20°C ± 5°C.

Ce traitement par irradiation aux électrons ou aux ions lourds est avantageusement effectué en présence d'un gaz riche en oxygène tel que de l'air, de l'oxygène, de l'air enrichi en oxygène ou un gaz enrichi en oxygène ou après exposition à un tel gaz. Comme précédemment, une irradiation aux électrons ou aux ions lourds sous ou après une exposition à une atmosphère riche en oxygène permet l'introduction d'oxygène sur la surface des polymères **[8]**.

La durée du traitement par irradiation aux électrons ou aux ions lourds est comprise entre 1 min et 2 h, notamment entre 5 min et 1 h, et, en particulier, entre 10 min et 30 min.

Dans une forme de mise en oeuvre particulière du procédé selon l'invention, le traitement oxydant aussi bien chimique que physique se fait en présence d'un masque. L'utilisation d'un masque lors de ce traitement oxydant permet d'obtenir une différence de réactivité des surfaces dites « vierges » versus celles dites « oxydées » (i.e. traitées). Cette différence de réactivité pourra être mise à profit pour l'obtention de surfaces patternées puisque le procédé tel que décrit dans la demande internationale WO 2008/078052 **[4]** sera plus performant sur les surfaces « oxydées » vis-à-vis des surfaces « vierges ».

Ainsi, la surface du support solide sur laquelle le film organique doit être formé est équipée d'un masque qui la recouvre au moins en partie et qui la protège lors du traitement oxydant. Le masque permet de « masquer » localement la réactivité chimique de la surface à l'égard du traitement oxydant.

Le masque correspond typiquement à une entité physique qui n'est ni greffée à la surface, ni liée de manière covalente à celle-ci. Il peut notamment s'agir d'un matériau massif ou d'une mince couche, typiquement de quelques Ångstrom à quelques microns, de matière inorganique ou organique, déposée sur la surface. Le masque est avantageusement constitué d'une mince couche agissant comme une couche de moindre cohésion aisément éliminable dans des conditions douces. Typiquement les conditions douces correspondent à un simple lavage chimique, effectué généralement à l'aide d'un solvant dans lequel le masque est soluble, à un traitement aux ultrasons dans un solvant dans lequel le masque est soluble ou à une élévation de la température.

La matière constituant le masque peut ainsi être choisie dans une large gamme. Elle sera généralement choisie en fonction de la nature du support solide. Avantageusement, le masque est composé d'alkylthiols en particulier d'alkylthiols à chaîne longue, souvent en C15-C20 et typiquement en C18.

Les techniques de dépôts de masque sont connues de l'homme du métier. Il peut s'agir notamment d'enduction, de vaporisation ou encore d'immersion. Ainsi, le masque, sous forme d'une mince couche de matière, peut-être par exemple déposé soit par dessin direct à partir d'un feutre (type crayon) imprégné de la matière choisie, par le procédé dit « du tampon » et/ou par les techniques de lithographie classique telles que spin-coating, puis insolation à travers un masque physique ou via un faisceau de lumière ou de particules pilotable, puis révélation.

Une fois que la surface du support solide et/ou le support solide ont subi un traitement oxydant tel que précédemment défini et préalablement à l'étape de greffage chimique radicalaire, la surface du support solide et/ou le support solide peuvent être rincés, lavés et/ou séchés.

Avantageusement, la surface du support solide et/ou le support solide subissent un ou plusieurs rinçage(s) notamment dans de l'eau telle que de l'eau MilliQ. Ensuite, la surface du support solide et/ou le support solide sont soumis à un traitement par des ultrasons pendant une durée de 5 min à 30 min et notamment de l'ordre de 10 min (i.e. 10 min ± 2 min) avant d'être séchés.

Le terme « greffage chimique radicalaire » lors de l'étape (ii) se réfère notamment à l'utilisation d'entités moléculaires possédant un électron non apparié pour former des liaisons de type liaison covalente avec la surface du support solide, lesdites entités moléculaires étant générées indépendamment de la surface sur laquelle elles sont destinées à être greffées. Ainsi, la réaction radicalaire conduit à la formation de liaisons covalentes entre la surface du support solide et le film organique.

Le film organique greffé sur le polymère constituant le support solide ou du moins la surface de ce support présente une longueur inférieure à 50 nm, avantageusement inférieure à 40 nm, notamment inférieure à 30 nm et, en particulier, inférieure à 20 nm.

Le film organique greffé sur le polymère constituant le support solide ou du moins la surface de ce support est un (co)polymère principalement issu de plusieurs unités monomères identiques et/ou différentes.

Avantageusement, la totalité ou une partie des unités monomères mises en oeuvre dans le cadre de la présente invention sont des monomères polymérisables par voie radicalaire. Par « monomères polymérisables par voie radicalaire », on entend des monomères susceptibles de polymériser en conditions radicalaires après amorçage par une entité chimique radicalaire. Typiquement, il s'agit de monomères comportant au moins une liaison de type éthylénique, i.e. de molécules de type éthylénique.

Les monomères vinyliques, notamment les monomères décrits dans les demandes internationales WO 2005/033378 et WO 2006/097611 sont particulièrement concernés **[9, 10]**.

Selon une forme de réalisation particulièrement avantageuse de l'invention, le ou les monomères vinyliques sont choisis parmi les monomères de formule (II) suivants : 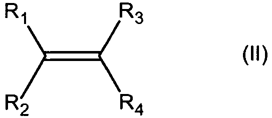 dans laquelle les groupes R₁ à R₄, identiques ou différents, représentent un atome monovalent non métallique tel qu'un atome d'halogène, un atome d'hydrogène, un groupe chimique saturé ou insaturé, tel qu'un groupe alkyle, aryle, un nitrile, un carbonyle, une amine, un amide ou un groupe -COOR₅ dans lequel R₅ représente un atome d'hydrogène ou un groupe alkyle en C₁-C₁₂ et de préférence en C₁-C₆.

Les monomères de formule (II) ci-dessus sont en particulier choisis dans le groupe constitué par l'acide acrylique, l'acétate de vinyle, l'acrylonitrile, le méthacrylonitrile, le méthacrylate de méthyle, le méthacrylate d'éthyle, le méthacrylate de butyle, le méthacrylate de propyle, le méthacrylate d'hydroxyéthyle (HEMA), le méthacrylate d'hydroxypropyle, le méthacrylate de glycidyle et leurs dérivés ; les acrylamides et notamment les méthacrylamides d'amino-éthyle, propyle, butyle, pentyle et hexyle, les cyanoacrylates, les di-acrylates et di-méthacrylates, les tri-acrylates et triméthacrylates, les tétra-acrylates et tétraméthacrylates (tels que le pentaérythritol tétraméthacrylate), le styrène et ses dérivés, le parachloro-styrène, le pentafluoro-styrène, la N-vinyl pyrrolidone, la 4-vinyl pyridine, la 2-vinyl pyridine, les halogénures de vinyle, d'acryloyle ou de méthacryloyle, le di-vinylbenzène (DVB), et plus généralement les agents réticulants vinyliques ou à base d'acrylate, de méthacrylate, et de leurs dérivés.

Le film organique est greffé sur la surface du support solide de façon indirecte. Par « greffage indirect », on entend le cas où une entité moléculaire sépare le (co)polymère constituant le film organique de la surface du support solide. Ainsi, cette entité moléculaire est liée par une liaison covalente à la surface du support solide et par une autre liaison covalente au film organique.

Une telle entité moléculaire est avantageusement issue d'un primaire d'adhésion distinct du ou des monomères tels que précédemment définis. Plus particulièrement, un tel primaire d'adhésion réagit tout d'abord par greffage chimique radicalaire avec la surface du support solide puis le dérivé greffé issu du primaire d'adhésion réagit, par réaction radicalaire, avec un monomère tel que précédemment défini. Dans cette variante, il est clair que le (co)polymère formant le film organique peut éventuellement contenir, entre certaines des unités monomères le constituant, une ou plusieurs unités issues du primaire d'adhésion utilisé pour greffer ledit polymère à la surface du support solide.

Par « primaire d'adhésion », on entend toute molécule organique susceptible, sous certaines conditions, de se chimisorber à la surface d'un support solide par réaction radicalaire tel qu'un greffage chimique radicalaire. De telles molécules comportent au moins un groupe fonctionnel susceptible de réagir avec un radical et également une fonction réactive vis-à-vis d'un autre radical après chimisorption.

Le primaire d'adhésion est avantageusement un sel d'aryle clivable choisi dans le groupe constitué par les sels d'aryle diazonium, les sels d'aryle d'ammonium, les sels d'aryle phosphonium et les sels d'aryle sulfonium. Dans ces sels, le groupe aryle est un groupe aryle qui peut être représenté par R₆ tel que défini ci-après.

Dans le cadre de la présente invention, le primaire d'adhésion est un sel d'aryle diazonium et, en particulier, un composé de formule (I) suivante :

R₆-N₂⁺, A⁻ (I)

dans laquelle :
- A représente un anion monovalent et
- R₆ représente un groupe aryle.

A titre de groupe aryle des sels d'aryle clivables et notamment des composés de formule (I) ci-dessus, on peut avantageusement citer les structures carbonées aromatiques ou hétéroaromatiques, éventuellement mono- ou polysubstituées, constituées d'un ou plusieurs cycles aromatiques ou hétéroaromatiques comportant chacun de 3 à 8 atomes, le ou les hétéroatomes pouvant être N, O, P ou S. Le ou les substituants peuvent contenir un ou plusieurs hétéroatomes, tels que N, O, F, Cl, P, Si, Br ou S ainsi que des groupes alkyles en C₁ à C₆ notamment.

Au sein des sels d'aryle clivables et notamment des composés de formule (I) ci-dessus, R₆ est de préférence choisi parmi les groupes aryles substitués par des groupements attracteurs d'électrons tels que NO₂, COH, les cétones, CN, CO₂H, NH₂ (sous forme de NH₃⁺), les esters et les halogènes. Les groupes R₆ de type aryle particulièrement préférés sont les radicaux carboxyphényle, aminophényle, nitrophényle et phényle.

Au sein des composés de formule (I) ci-dessus, A peut notamment être choisi parmi les anions inorganiques tels que les halogénures comme I⁻, Br⁻ et Cl⁻, les halogénoborates tels que le tétrafluoroborate, les perchlorates et les sulfonates et les anions organiques tels que les alcoolates et les carboxylates.

A titre de composés de formule (I), il est particulièrement avantageux d'utiliser un composé choisi dans le groupe constitué par le tétrafluoroborate de phényldiazonium, le tétrafluoroborate de 4-nitrophényldiazonium, le tétrafluoroborate de 4-bromophényldiazonium, le chlorure de 4-aminophényldiazonium, le chlorure de 4-aminométhylphényldiazonium, le chlorure de 2-méthyl-4-chlorophényldiazonium, le tétrafluoroborate de 4-benzoylbenzènediazonium, le tétrafluoroborate de 4-cyanophényldiazonium, le tétrafluoroborate du 4-carboxyphényldiazonium, le tétrafluoroborate de 4-acétamidophényldiazonium, le tétrafluoroborate de l'acide 4-phénylacétique diazonium, le sulfate de 2-méthyl-4-[(2-méthylphényl)diazényl]benzènediazonium, le chlorure de 9,10-dioxo-9,10-dihydro-1-anthracènediazonium, le tétrafluoroborate de 4-nitronaphtalènediazonium et le tétrafluoroborate de naphtalènediazonium.

Dans une 1^{ère} variante, l'étape (ii) du procédé selon l'invention peut comprendre les étapes suivantes consistant à :
a) ajouter au moins un monomère notamment tel que précédemment défini à une solution contenant au moins un primaire d'adhésion différent dudit monomère notamment tel que précédemment défini en présence d'au moins un solvant,
b) placer la solution obtenue à l'étape (a) dans des conditions non-électrochimiques permettant la formation d'entités radicalaires à partir du primaire d'adhésion,
c) mettre en contact la surface du support solide avec la solution de l'étape (b).

Dans une 2^{nde} variante, l'étape (ii) du procédé selon l'invention peut comprendre les étapes suivantes consistant à :
a') mettre en contact la surface du support solide avec une solution contenant au moins un primaire d'adhésion notamment tel que précédemment défini en présence d'au moins un solvant et, éventuellement d'au moins un monomère distinct dudit primaire d'adhésion notamment tel que précédemment défini,
b') placer la surface du support solide en contact avec la solution de l'étape (a') dans des conditions non-électrochimiques permettant la formation d'entités radicalaires à partir dudit primaire d'adhésion,
c') éventuellement ajouter au moins un monomère distinct dudit primaire d'adhésion notamment tel que précédemment défini à la solution obtenue à l'étape (b').

Dans la 2^{nde} variante du procédé telle que définie ci-dessus, on peut envisager les trois cas de figures suivants :
Cas 1. les monomères ne sont pas présents dans la solution de l'étape (a') et ne sont ajoutés qu'à l'étape (c'). Ce cas de figure est particulièrement intéressant lorsque le monomère utilisé est faiblement soluble et notamment en solution aqueuse ; lorsque le monomère est non hydrosoluble et le primaire d'adhésion est le sel de diazonium. Ainsi, à l'étape (c'), le monomère peut être ajouté en solution notamment dans le même solvant que celui mis en oeuvre à l'étape (a') et avantageusement sous la forme d'une émulsion ou d'une dispersion réalisée préalablement à l'aide d'ultrasons ou de tensio-actifs.
Cas 2. les monomères sont présents dans la solution de l'étape (a') et le procédé ne présente pas d'étape (c'). Ce cas de figure s'applique notamment lorsque le primaire est un sel de diazonium et lorsque le monomère est hydrosoluble. Le procédé conformément à la première variante est également utilisable dans ce cas de figure.
Cas 3. une partie des monomères est présente dans la solution de l'étape (a') et une autre partie des monomères de nature identique ou différente n'est ajoutée qu'à l'étape (c').

Le primaire d'adhésion peut être soit introduit dans la (ou les) solution(s) en l'état, soit préparé *in situ* dans cette (ou ces) dernière(s).

Lorsque le primaire d'adhésion est préparé *in situ*, on utilise avantageusement un précurseur d'un tel primaire d'adhésion. Par « précurseur d'un primaire d'adhésion », on entend dans le cadre de la présente invention une molécule séparée dudit primaire d'adhésion par une étape opératoire unique et aisée à mettre en oeuvre.

Généralement, les précurseurs présentent une stabilité plus importante que le primaire d'adhésion dans les mêmes conditions environnementales. Par exemple, les arylamines sont des précurseurs des sels d'aryle diazonium. En effet, par simple réaction, par exemple, avec NaNO₂ dans un milieu aqueux acide, ou avec NOBF₄ en milieu organique, il est possible de former les sels d'aryle diazonium correspondants.

Un précurseur avantageusement mis en oeuvre dans le cadre de la présente invention est un précurseur de sels d'aryle diazonium de formule (III) suivante :

R₆-NH₂ (III),

R₆ étant tel que précédemment défini.

A titre d'exemples non limitatifs, un précurseur susceptible d'être mis en oeuvre dans le cadre de la présente invention est, en particulier, choisi dans le groupe constitué par la 4-aminophénylamine (ou p-phénylènediamine ou encore 1,4-diaminophénylène), l'acide 4-amino-benzoïque et la 4-aminométhylphénylamine.

La quantité de primaires d'adhésion ou de précurseurs de primaires d'adhésion dans la solution de l'étape (a) et (a') peut varier en fonction du souhait de l'expérimentateur. Cette quantité est avantageusement comprise entre 10⁻⁶ M et 5 M environ, de préférence entre 5.10⁻² M et 10⁻¹ M.

La quantité de monomères polymérisables dans la solution de l'étape (a), (a') et/ou (c') peut varier en fonction du souhait de l'expérimentateur. Cette quantité peut être supérieure à la solubilité du monomère considéré dans le solvant de ces solutions (i.e. solvant de réaction) employé et peut représenter par exemple de 18 à 40 fois la solubilité dudit monomère dans la solution à une température donnée, généralement la température ambiante ou celle de réaction. Dans ces conditions, il est avantageux d'employer des moyens permettant la dispersion des molécules de monomères dans la solution tels qu'un tensio-actif ou des ultrasons.

Lorsque le solvant est protique, selon un mode de réalisation particulier de l'invention, il est recommandé d'ajouter un tensio-actif lorsque le monomère présente une solubilité inférieure à 5.10⁻² M. Les tensio-actifs utilisables sont notamment les tensio-actifs anioniques, les tensio-actifs cationiques, les tensio-actifs zwitterioniques, les tensio-actifs amphotères et les tensio-actifs neutres (non-ioniques) et, notamment, les tensio-actifs décrits dans la demande internationale WO 2008/078052 **[4]**. Typiquement la concentration en tensio-actif sera comprise entre 0,5 mM et 5 M environ, de préférence entre 0,1 mM et 150 mM environ. La concentration recommandée en tensio-actif est usuellement de 10 mM.

L'étape (ii) du procédé est généralement effectuée dans des conditions douces et non destructrices soit pour la surface de l'échantillon sur laquelle il est souhaitable de greffer le film, soit pour le monomère employé. Ainsi, il est souhaitable de travailler dans des conditions dans lesquelles le monomère ne se dégrade pas. De plus, la température des solutions est limitée par le solvant de réaction, qu'il est préférable de conserver liquide. Typiquement le procédé est effectué entre 0 et 100°C et généralement dans les conditions normales de température et de pression (CNTP), fonction de l'endroit où l'utilisateur se trouve, souvent à environ 25°C à une pression avoisinant 1 atm.

La solution mise en oeuvre lors des étapes (a), (a'), (b), (b'), (c) ou (c') du procédé selon la présente invention contient, en tant que solvant, un solvant qui peut être :
- soit un solvant protique, i.e. un solvant qui comporte au moins un atome d'hydrogène susceptible d'être libéré sous forme de proton et avantageusement choisi dans le groupe constitué par l'eau, l'eau désionisée, l'eau distillée, acidifiées ou basiques, l'acide acétique, les solvants hydroxylés comme le méthanol et l'éthanol, les glycols liquides de faible poids moléculaire tels que l'éthylèneglycol, et leurs mélanges ;
- soit un solvant aprotique, i.e. un solvant qui n'est pas susceptible de libérer un proton ou d'en accepter un dans des conditions non extrêmes et avantageusement choisi parmi la diméthylformamide (DMF), l'acétone, l'acétonitrile et le diméthyl sulfoxyde (DMSO) ;
- soit un mélange d'au moins un solvant protique et d'au moins un solvant aprotique.

Les conditions permettant la formation d'au moins une entité radicalaire dans l'étape (b) ou (b') du procédé de la présente invention sont des conditions qui permettent la formation d'entités radicalaires en l'absence de l'application d'une quelconque tension électrique à la solution de l'étape (b) ou (b') ou au support solide.

Ces conditions impliquent des paramètres tels que, par exemple, la température, la nature du solvant, la présence d'un additif particulier, l'agitation, la pression alors que le courant électrique n'intervient pas lors de la formation des entités radicalaires. Les conditions permettant la formation d'entités radicalaires sont nombreuses et ce type de réaction est connu et étudié en détail dans l'art antérieur.

Il est ainsi par exemple possible d'agir sur l'environnement thermique, cinétique, chimique, photochimique ou radiochimique du primaire d'adhésion afin de le déstabiliser pour qu'il forme une entité radicalaire. Il est bien entendu possible d'agir simultanément sur plusieurs de ces paramètres.

Dans le cadre de la présente invention, les conditions permettant la formation d'entités radicalaires lors de l'étape de greffage selon l'invention sont typiquement choisies dans le groupe constitué par les conditions thermiques, les conditions cinétiques, les conditions chimiques, les conditions photochimiques, les conditions radiochimiques et leurs combinaisons auxquelles le primaire d'adhésion est soumis. Avantageusement, les conditions mises en oeuvre dans le cadre de l'étape de greffage du procédé selon la présente invention sont choisies dans le groupe constitué par les conditions thermiques, les conditions chimiques, les conditions photochimiques, les conditions radiochimiques et leurs combinaisons entre elles et/ou avec les conditions cinétiques. Les conditions mises en oeuvre dans le cadre de l'étape de greffage du procédé selon la présente invention sont plus particulièrement des conditions chimiques.

L'environnement thermique est fonction de la température. Son contrôle est aisé avec les moyens de chauffage habituellement employés par l'homme du métier. L'utilisation d'un environnement thermostaté présente un intérêt particulier puisqu'il permet un contrôle précis des conditions de réaction.

L'environnement cinétique correspond essentiellement à l'agitation du système et aux forces de frottement. Il ne s'agit pas ici de l'agitation des molécules en elle-même (élongation de liaisons etc.), mais du mouvement global des molécules.

Ainsi, lors de ladite étape de greffage, la solution de l'étape (b) ou (b') est soumise à une agitation mécanique et/ou à un traitement aux ultrasons. Dans une première variante, on soumet la solution mise en oeuvre lors de l'étape (b) ou (b') à une forte vitesse de rotation par le biais d'un agitateur magnétique et d'un barreau aimanté et ce, pendant une durée comprise entre 5 min et 24 h d'agitation, notamment comprise entre 10 min et 12 h et, en particulier, entre 15 min et 6 h. Dans une seconde variante, on soumet la solution mise en oeuvre lors de l'étape (b) ou (b') à un traitement aux ultra-sons notamment en utilisant un bac à ultra-sons, typiquement d'une puissance d'absorption de 500 W et à une fréquence 25 kHz ou 45 kHz et ce, pendant une durée comprise entre 1 min et 24 h d'agitation, notamment comprise entre 15 min et 12 h et, en particulier, entre 30 min et 6 h.

Enfin, l'action de rayonnements divers tels que rayonnements électromagnétiques, rayonnements γ, rayons UV, faisceaux d'électrons ou d'ions peut également déstabiliser suffisamment le primaire d'adhésion pour qu'il forme des radicaux. La longueur d'onde employée sera choisie, sans aucun effort inventif, en fonction du primaire d'adhésion utilisé.

Dans le cadre des conditions chimiques, on emploie dans la solution mise en oeuvre lors de l'étape (b) ou (b') un ou plusieurs amorceur(s) chimique(s). La présence d'amorceurs chimiques est souvent couplée à des conditions environnementales non chimiques, telles qu'exposées ci-dessus. Typiquement, un amorceur chimique dont la stabilité est moins grande que celle du primaire d'adhésion mis en oeuvre dans les conditions environnementales choisies va évoluer sous une forme instable qui agira sur ce dernier et engendrera, à partir de celui-ci, la formation d'entités radicalaires. Il est également possible d'employer des amorceurs chimiques dont l'action n'est pas liée essentiellement aux conditions environnementales et qui peuvent agir sur de vastes plages de conditions thermiques ou encore cinétiques. L'amorceur sera de préférence adapté à l'environnement de la réaction, par exemple au solvant employé.

Il existe de nombreux amorceurs chimiques. On en distingue généralement trois types en fonction des conditions environnementales employées :
- les amorceurs thermiques dont les plus courants sont les peroxydes ou les composés azoïques. Sous l'action de la chaleur, ces composés se dissocient en radicaux libres. Dans ce cas, la réaction est effectuée à une température minimum correspondant à celle nécessaire à la formation de radicaux à partir de l'amorceur. Ce type d'amorceurs chimiques est en général utilisé spécifiquement dans un certain intervalle de température, en fonction de leur cinétique de décomposition ;
- les amorceurs photochimiques ou radiochimiques qui sont excités par le rayonnement déclenché par irradiation (le plus souvent par UV, mais aussi par radiations γ ou par faisceaux d'électrons) permettent la production de radicaux par des mécanismes plus ou moins complexes. Le Bu₃SnH et l'I₂ appartiennent aux amorceurs photochimiques ou radiochimiques ;

- les amorceurs essentiellement chimiques, ce type d'amorceurs agissant rapidement et dans des conditions normales de température et de pression sur le primaire d'adhésion pour lui permettre de former des radicaux. De tels amorceurs ont généralement un potentiel d'oxydoréduction qui est inférieur au potentiel de réduction du primaire d'adhésion utilisé dans les conditions de réaction. Selon la nature du primaire d'adhésion, il peut ainsi s'agir par exemple d'un métal réducteur, tel que du fer, zinc, nickel ; d'un métallocène ; d'un réducteur organique comme l'acide hypophosphoreux (H₃PO₂) ou l'acide ascorbique ; d'une base organique ou inorganique dans des proportions suffisantes pour permettre une déstabilisation du primaire d'adhésion.

Avantageusement, le métal réducteur utilisé en tant qu'amorceur chimique se présente sous forme finement divisée, comme de la laine (également appelée plus communément « paille ») métallique ou de la limaille métallique. Généralement, lorsqu'une base organique ou inorganique est utilisée comme amorceur chimique, un pH supérieur ou égal à 4 est généralement suffisant. Des structures de type réservoir de radicaux, comme des matrices polymères préalablement irradiées par un faisceau d'électrons ou par un faisceau d'ions lourds et/ou par l'ensemble des moyens d'irradiation cités précédemment, peuvent également être employées en tant qu'amorceurs chimiques pour déstabiliser le primaire d'adhésion et conduire à la formation d'entités radicalaires à partir de ce primaire.

L'étape (ii) du procédé selon la présente invention correspond à l'étape de greffage telle que précédemment définie. Elle peut durer de 10 min à 6 h, notamment de 30 min à 4 h, en particulier de 1 h à 2 h, et, plus particulièrement environ 90 min (i.e. 90 min ± 10 min).

Comme le primaire d'adhésion et le monomère polymérisable par voie radicalaire sont présents en grande quantité dans la solution de l'étape (c) ou (c'), l'étape de greffage peut être stoppée avant que toutes les molécules ne soient fixées sur le support solide. L'homme du métier connaît différentes techniques permettant d'arrêter l'étape de greffage et saura déterminer la technique la mieux adaptée en fonction du primaire d'adhésion et du monomère polymérisable mis en oeuvre. A titre d'exemples de telles techniques, on peut citer un changement de pH de la solution de l'étape (c) ou (c') notamment en y ajoutant une solution basique (par exemple, de l'eau basique à un pH supérieur à 10), une élimination du primaire d'adhésion et du monomère polymérisable dans la solution de l'étape (c) ou (c') (par exemple, par filtration, par précipitation ou par complexation) ou le retrait du support solide de la solution de l'étape (c) ou (c').

La présente invention concerne également un support solide sur une partie de la surface duquel est greffé un film organique tel que précédemment défini, susceptible d'être préparé par un procédé selon la présente invention. Avec un prétraitement oxydant tel que défini dans la présente, le film organique greffé est plus épais et les propriétés physico-chimiques du support ainsi greffé sont très largement modifiées. D'ailleurs, d'un point de vue de la modification de l'angle de contact et donc de l'hydrophilie des polymères, ceci se vérifie largement dans la présente demande. Faire varier l'angle de contact revient à faire varier les propriétés chimiques du matériau.

La présente invention concerne également l'utilisation d'un traitement oxydant tel que précédemment défini pour améliorer un procédé de greffage chimique radicalaire d'un film organique tel que précédemment défini sur tout ou partie de la surface d'un support solide.

Cette amélioration peut être mise en évidence en comparant l'angle de contact d'une goutte disposée sur le support solide greffé, par greffage chimique radicalaire, avec un film organique tel que précédemment défini après un traitement oxydant avec l'angle de contact d'une goutte de même volume et de même nature disposée sur le support solide greffé, par greffage chimique radicalaire, avec un film organique sans traitement oxydant.

L'angle de contact de la goutte sur le support solide greffé après un traitement oxydant est notamment diminué de 5 à 70% et, en particulier, de 20 à 50% par rapport à l'angle de contact de la goutte sur le support solide greffé sans traitement oxydant.

Cette amélioration peut également être mise en évidence en comparant l'épaisseur d'un film organique tel que précédemment défini greffé sur le support solide par greffage chimique radicalaire après un traitement oxydant avec l'épaisseur d'un film organique greffé dans les mêmes conditions (même solvant, même primaire d'adhésion et même monomère, même temps de greffage) sur le support solide sans traitement oxydant. Cette augmentation de l'épaisseur est visualisable par analyse IR. En effet, par analyse IR, les bandes attribuées au film organique greffé sont plus visibles ce qui revient à dire que l'épaisseur du film est augmentée.

D'autres caractéristiques et avantages de la présente invention apparaîtront encore à l'homme du métier à la lecture des exemples ci-dessous donnés à titre illustratif et non limitatif, en référence aux figures annexées.

### BRÈVE DESCRIPTION DES DESSINS

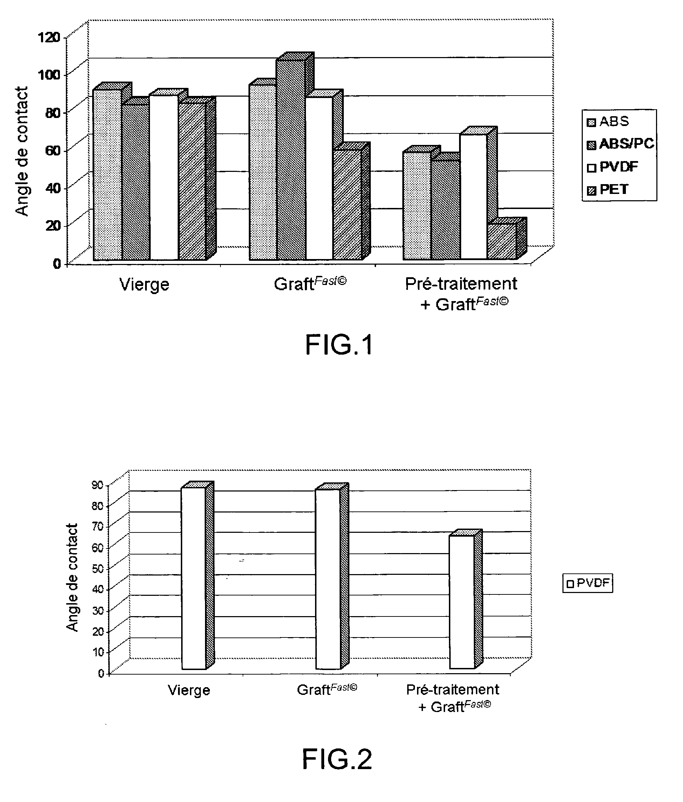

La Figure 1 présente l'angle de contact mesuré pour une goutte d'eau déposée sur une surface en ABS, ABS/PC, PVDF ou PET non traitée et non greffée (« Vierge ») ; une surface en ABS, ABS/PC, PVDF ou PET greffée avec du PAA selon le procédé tel que décrit dans la demande internationale WO 2008/078052 [4] (« GraftFast^{©} ») et une surface en ABS, ABS/PC, PVDF ou PET pré-traitée par une oxydation Fenton puis greffée avec du PAA selon le procédé tel que décrit dans la demande internationale WO 2008/078052 **[4]** (« Pré-traitement + GraftFast© »).
La Figure 2 présente l'angle de contact mesuré pour une goutte d'eau déposée sur une surface en PVDF non traitée et non greffée (« Vierge ») ; une surface en PVDF greffée avec du PAA selon le procédé tel que décrit dans la demande internationale WO 2008/078052 **[4]** (« GraftFast^{©} ») et une surface en PVDF pré-traitée à la potasse alcoolique puis greffée avec du PAA selon le procédé tel que décrit dans la demande internationale WO 2008/078052 **[4]** (« Pré-traitement + GraftFast^{©} »).

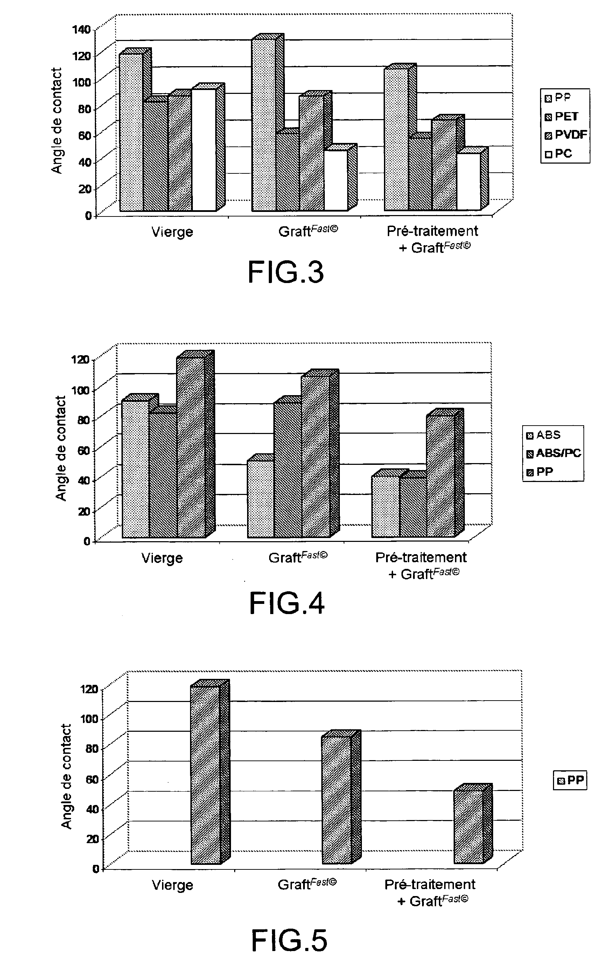

La Figure 3 présente l'angle de contact mesuré pour une goutte d'eau déposée sur une surface en PP, PET, PVDF ou PC non traitée et non greffée (« Vierge ») ; une surface en PP, PET, PVDF ou PC greffée avec du PAA selon le procédé tel que décrit dans la demande internationale WO 2008/078052 **[4]** (« GraftFast^{©} ») et une surface en PP, PET, PVDF ou PC pré-traitée à l'ozone puis greffée avec du PAA selon le procédé tel que décrit dans la demande internationale WO 2008/078052 **[4]** (« Pré-traitement + GraftFast^{©} »).
La Figure 4 présente l'angle de contact mesuré pour une goutte d'eau déposée sur une surface en ABS, ABS/PC ou PP non traitée et non greffée (« Vierge ») ; une surface en ABS, ABS/PC ou PP greffée avec du pHEMA selon le procédé tel que décrit dans la demande internationale WO 2008/078052 **[4]** (« GraftFast^{©} ») et une surface en ABS, ABS/PC ou PP pré-traitée par une oxydation Fenton puis greffée avec du pHEMA selon le procédé tel que décrit dans la demande internationale WO 2008/078052 **[4]** (« Pré-traitement + GraftFast^{©} »).
La Figure 5 présente l'angle de contact mesuré pour une goutte d'eau déposée sur une surface en PP non traitée et non greffée (« Vierge ») ; une surface en PP greffée avec du p(4-VP) selon le procédé tel que décrit dans la demande internationale WO 2008/078052 **[4]** (« GraftFast^{©} ») et une surface en PP pré-traitée par une oxydation Fenton puis greffée avec du p(4-VP) selon le procédé tel que décrit dans la demande internationale WO 2008/078052 **[4]** (« Pré-traitement + GraftFast^{©} »).

### EXPOSÉ DÉTAILLÉ DE MODES DE RÉALISATION PARTICULIERS

Les exemples qui suivent ont été réalisés dans une cuve en verre.

Sauf précision contraire, ils ont été réalisés dans des conditions normales de température et de pression (environ 25°C sous environ 1 atm) à l'air ambiant. Sauf mention contraire, les réactifs employés ont été directement obtenus dans le commerce sans purification supplémentaire.

Les lames d'or et les échantillons de plastiques ou de polymères avaient une surface de 1 x 5 cm². Les échantillons de plastiques testés comprennent de l'Acrylonitrile Butadiène Styrène (ABS), de l'Acrylonitrile Butadiène Styrène/PolyCarbonate (ABS/PC), du polypropylène (PP) et du polyamide (PA). Les échantillons de polymères testés comprennent du polyfluorure de vinylidène (PVDF), du polycarbonate (PC) et du polyéthylène téréphtalate (PET).

Aucune précaution n'a été prise concernant la composition de l'atmosphère et les solutions n'ont pas été dégazées. Avant leur utilisation, les échantillons de plastiques ou de polymères ont été préalablement nettoyés à l'aide d'une solution de détergent industriel (TDF4) sous ultrasons pendant 10 min puis passés aux ultrasons dans de l'eau milliQ pendant 10 min avant d'être séchés.

Les analyses des différents échantillons ont été effectuées par spectrométrie IR et/ou par la mesure de l'angle de contact entre une goutte d'eau d'un volume constant (2 µL) déposée à la surface des échantillons.

### 1. Traitements oxydants des plastiques et des polymères.

### Exemple 1.1. Oxydation par Réaction de Fenton à partir de tétrafluoroborate de fer(II).

Le tétrafluoroborate de fer(II) (1,69 g, 5.10⁻² mol) a été solubilisé dans 100 mL d'acide sulfurique à 0,001 M dans l'eau. Dans cette solution, ont été immergés les échantillons de plastiques et/ou de polymères. 12 mL (0,125 mol) de peroxyde d'hydrogène à 35% dans l'eau ont été ensuite ajoutés en gardant un pH constant de 3. Après 25 min, les échantillons ont été rincés à l'eau MilliQ, passés aux ultrasons dans de l'eau pendant 10 min avant d'être séchés.

### Exemple 1.2. Oxydation par Réaction de Fenton à partir de sulfate de fer(II).

Le sulfate de fer(II) (3,475 g, 5. 10⁻² mol) a été solubilisé dans 25 mL d'acide sulfurique à 0,001 M dans l'eau. Dans cette solution, ont été immergés les échantillons de plastique et/ou de polymères. 5 mL (0,062 mol) de peroxyde d'hydrogène à 35% dans l'eau ont été ensuite ajoutés en gardant un pH constant de 3. Après 25 min, les échantillons ont été rincés à l'eau MilliQ, passés aux ultrasons dans de l'eau pendant 10 min avant d'être séchés.

### Exemple 1.3. Oxydation par Traitement à la potasse alcoolique.

4 g (7,1 10⁻² mol) d'hydroxyde de potassium ont été dissous dans 20 mL d'éthanol à 95%. Dans cette solution, ont été immergés les échantillons de polymères pendant un temps variant typiquement de 20 min à 2 h. Les échantillons ont été rincés à l'eau MilliQ, passés aux ultrasons dans de l'eau pendant 10 min avant d'être séchés.

### Exemple 1.4. Oxydation par Traitement à l'ozone.

Les différents plastiques et polymères ont été soumis à un flux d'ozone (exposition à une atmosphère d'ozone) pendant 10 min.

Le générateur d'ozone est un UVO-Cleaner Model 42-200 à lampe à vapeur de mercure basse pression (28 mW/cm2, 254 nm).

### Exemple 1.5. Oxydation par Traitement au KMnO₄.

0,75 g de permanganate de potassium (5.10⁻³ mol) ont été ajoutés dans 25 mL d'une solution d'acide sulfurique à 3,3 M. Dans cette solution, ont été immergés les échantillons de plastique et/ou de polymères pendant 15 min. Les différents échantillons ont été rincés successivement à l'eau MilliQ, passés aux ultrasons dans l'eau milliQ avant d'être séchés.

Dans le cadre de l'ABS et l'ABS-PC, le KMnO₄ oxyde et détruit les nodules de polybutadiènes contenus dans l'ABS et l'ABS-PC. Les polyacrylonitriles peuvent également être oxydés notamment en polyamides.

Ces modifications oxydatives ne sont pas forcément visibles sur les spectres IR pour les essais réalisés dans le cadre de la présente invention. En revanche, en immergeant pendant 6 h les polymères dans une solution KMnO₄, de telles modifications oxydatives ont pu être mises en évidence.

### Exemple 1.6. Oxydation par Traitement au KMnO₄ (Exemple 1.5) suivi d'une Réaction de Fenton (Exemple 1.2).

L'exemple a été réalisé selon les modalités décrites dans *l'Exemple 1.5.* Les échantillons préparés ont ensuite été introduits dans le milieu réactionnel décrit dans *l'Exemple 1.2* pour une Réaction de Fenton à l'issue de laquelle ils ont été nettoyés et séchés ainsi que décrit précédemment.

Les résultats obtenus par les *Exemples 1.1* à 1.6 sont présentés dans le Tableau 1 pour les mesures d'angles de contact et dans le Tableau 2 pour la spectrométrie IR.

**Tableau 1 : Mesure des angles de contact d'une goutte d'eau (2 µL) avec les échantillons traités selon les exemples 1.1 à 1.6.**

| | **ABS** | **ABS/PC** | **PA** | **PP** | **PVDF** | **PC** | **PET** |
|---|---|---|---|---|---|---|---|
| ***Vierge*** | 90 | 81, 8 | 63,2 | 118,4 | 86, 9 | 91,6 | 82, 3 |
| ***Exemple 1.1*** | 36,8 | 44,4 | 71,2 | 92,6 | 61,5 | 29,7 | 42,2 |
| ***Exemple 1.2*** | 20,8 | 30,1 | / | / | / | / | / |
| ***Exemple 1.3*** | / | / | / | / | 60,2 | / | / |
| ***Exemple 1.4*** | 27,6 | 25,2 | 16,6 | 120 | 72,6 | 33,3 | 45 |
| ***Exemple 1.5*** | 17,9 | 20,3 | / | / | / | / | / |
| ***Exemple 1.6*** | 17,2 | 17,5 | / | / | / | / | / |

**Tableau 2 : Bandes IR apparues après les traitements oxydants sur les échantillons.**

| | ***Exemple 1.1*** | ***Exemple 1.2*** | ***Exemple 1.3*** | ***Exemple 1.5 (Après 6h)*** | ***Exemple 1.6*** |
|---|---|---|---|---|---|
| **ABS** | 3600-3200 cm⁻¹ | 3600-3200 cm⁻¹ | / | 3200-3150 cm⁻¹ | 3300-3200 cm⁻¹ |
| | 1670 cm⁻¹ | 1634 cm⁻¹ | | 1635 cm⁻¹ | 1670 cm⁻¹ |
| | | 1099 cm⁻¹ | | | 1103 cm⁻¹ |
| **ABS/PC** | 3600-3100 cm⁻¹ | 3600-3100 cm⁻¹ | / | 3150-3100 cm⁻¹ | 3600-3100 cm⁻¹ |
| | 1648 cm⁻¹ | 1631 cm⁻¹ | | 1635 cm⁻¹ | 1640 cm⁻¹ |
| | | 1079 cm⁻¹ | | | 1103 cm⁻¹ |
| **PA** | 3600-3100 cm⁻¹ | 3600-3000 cm⁻¹ | / | / | / |
| **PP** | 3600-3100 cm⁻¹ | 3600-3000 cm⁻¹ | / | / | / |
| | 1098 cm⁻¹ | | | | |
| **PVDF** | 3600-3110 cm⁻¹ | | 1596 cm⁻¹ | / | / |
| | 1641 cm⁻¹ | | | | |
| **PC** | 3600-3151 cm⁻¹ | | / | / | / |
| | 1646 cm⁻¹ | | | | |
| **PET** | 3340 cm⁻¹ | | / | / | / |

### 2. Greffage d'un film selon le protocole décrit dans la demande internationale WO 2008/078052 [4] sur les échantillons de plastiques et/ou de polymères.

### Mode opératoire :

Les plastiques (ABS, ABS/PC, PP et PA) non traités Fenton ont été nettoyés à l'eau savonneuse sous ultrasons pendant 10 min puis à l'eau MQ pendant 10 min.

### Exemple 2.1. Greffage d'un film de poly(acide acrylique) par le procédé tel que décrit dans la demande internationale WO 2008/078052 [4] à partir de l'acide 4-aminobenzoïque.

L'acide 4-aminobenzoïque (2,7 g, 2.10⁻² mol) a été solubilisé dans une solution d'acide chlorhydrique (100 mL à 0,5 M). A cette solution, ont été ajoutés 100 mL d'une solution de NaNO₂ (1,38 g, 2.10⁻² mol) dans l'eau.

A cette solution de sel de diazonium, ont été ajoutés 6,8 mL d'acide acrylique AA (10⁻¹ mol) puis 2 g de limailles de fer.

Les échantillons plastiques et/ou polymères ainsi qu'une lame d'or ont alors été introduits dans le milieu réactionnel pendant 90 min. Les différents échantillons ont été rincés successivement à l'eau MilliQ, passés aux ultrasons dans une solution de soude à 0,01 M puis rincés à l'eau milliQ avant d'être séchés.

L'analyse par spectrométrie IR de la lame d'or confirme que le bain de greffage était actif. Les bandes spécifiques à 3356 cm⁻¹ (déformation COOH), 1710 cm⁻¹ (déformation C=O) et 1265 cm⁻¹ (déformation C-O) sont présentes.

### Exemple 2.2. Greffage d'un film de poly(acide acrylique) par le procédé tel que décrit dans la demande internationale WO 2008/078052 [4] à partir du 1,4-diaminophénylène.

*Mode opératoire 1* : Le mode opératoire est identique à celui de *l'Exemple 2.1*, sauf qu'à l'acide 4-aminobenzoïque, a été substitué le 1,4-diaminophénylène (2,13 g, 2.10⁻² mol).

Les échantillons plastiques et/ou polymères ainsi qu'une lame d'or ont alors été introduits dans le milieu réactionnel pendant 90 min. Les différents échantillons ont été rincés successivement à l'eau MilliQ, passés aux ultrasons dans une solution de soude à 0,01 M puis rincés à l'eau milliQ avant d'être séchés.

*Mode opératoire 2* : L'acide 4-aminobenzoïque (1,07 g, 1.10⁻² mol) a été solubilisé dans une solution d'acide chlorhydrique (100 mL à 0,5 M). A cette solution, ont été ajoutés 100 mL d'une solution de NaNO₂ (0,69 g, 1.10⁻² mol) dans l'eau. A cette solution de sel de diazonium, ont été ajoutés 100 mL d'acide acrylique AA (1,46 mol) puis 15 g (0,27 mol) de limailles de fer.

Les échantillons plastiques et/ou polymères ainsi qu'une lame d'or ont alors été introduits dans le milieu réactionnel pendant 30 min à température ambiante, puis 90 min dans une étuve à 38°C. Les différents échantillons ont été rincés successivement à l'eau MilliQ, passés aux ultrasons dans une solution de soude à 0,1 M puis rincés à l'eau milliQ avant d'être séchés.

L'analyse par spectrométrie IR de la lame d'or confirme que le bain de greffage dans les deux modes opératoires était actif. Les bandes spécifiques à 3207 cm⁻¹ (déformation COOH), 1720 cm⁻¹ (déformation C=O) et 1262 cm⁻¹ (déformation C-O) sont présentes.

### Exemple 2.3. Greffage d'un film de poly(acide acrylique) par le procédé tel que décrit dans la demande internationale WO 2008/078052 [4] à partir du tétrafluoroborate de 4-nitrobenzène diazonium.

Le mode opératoire est identique à celui de *l'Exemple 2.1.* A l'acide 4-aminobenzoïque, a été substitué le tétrafluoroborate de 4-nitrobenzène diazonium (4,7 g, 2.10⁻² mol) et l'étape de conversion du précurseur de sel de diazonium en sel de diazonium en présence de NaNO₂ n'est plus nécessaire.

Les échantillons plastiques et/ou polymères ainsi qu'une lame d'or ont alors été introduits dans le milieu réactionnel pendant 90 min. Les différents échantillons ont été rincés successivement à l'eau MilliQ, passés aux ultrasons dans une solution de soude à 0,01 M puis rincés à l'eau milliQ avant d'être séchés.

L'analyse par spectrométrie IR de la lame d'or confirme que le bain de greffage était actif. Les bandes spécifiques à 3405 cm⁻¹ (déformation COOH), 1695 cm⁻¹ (déformation C=O), 1597 cm⁻¹ (déformation C=C), 1518 cm⁻¹ (déformation N=O), 1345 cm-¹ (déformation N=O) et 1162 cm⁻¹ (déformation C-O) sont présentes.

### Exemple 2.4. Greffage d'un film de poly(HEMA) par le procédé tel que décrit dans la demande internationale WO 2008/078052 [4] à partir de l'acide 4-aminobenzoïque.

Le mode opératoire est identique à celui de *l'Exemple 2.1.* A l'acide acrylique AA, ont été substitués 12,5 mL de 2-hydroxyéthylméthacrylate (10⁻¹ mol).

Les différents échantillons ont été rincés successivement à l'eau MilliQ, puis immergés dans un bain d'éthanol à chaud pendant 30 min avant d'être séchés.

L'analyse par spectrométrie IR de la lame d'or confirme que le bain de greffage était actif. Les bandes spécifiques à 3387 cm⁻¹ (déformation OH), 1726 cm⁻¹ (déformation C=O) et 1160 cm⁻¹ (déformation C-O) sont présentes.

### Exemple 2.5. Greffage d'un film de poly(4-vinylpyridine) par le procédé tel que décrit dans la demande internationale WO 2008/078052 [4] à partir de l'acide 4-aminobenzoïque.

Le mode opératoire est identique à celui de *l'Exemple 2.1.* A l'acide acrylique AA, a été substitué 100 mL d'une solution de 4-vinylpyridine (4-VP) à 0,1 M et H₂SO₄ à 1 M dans l'eau.

Les différents échantillons ont été rincés successivement à l'eau MilliQ, puis immergés dans un bain d'éthanol à chaud pendant 30 min avant d'être séchés.

L'analyse par spectrométrie IR de la lame d'or confirme que le bain de greffage était actif. Les bandes spécifiques à 3371 cm⁻¹ (déformation COOH), 1600 cm⁻¹ (déformation C=N) et 1556 cm⁻¹ (déformation C=C) sont présentes.

Les résultats obtenus par mesures d'angles de contact pour les *Exemples 2.1 à 2.5* sont présentés dans le Tableau 3.

**Tableau 3**

| | **ABS** | **ABS/PC** | **PA** | **PP** | **PVDF** | **PC** | **PET** |
|---|---|---|---|---|---|---|---|
| **Exemple 2.1** | 92 | 105,4 | 83 | 129 | 86 | 45,8 | 58 |
| **Exemple 2.2** | 78 | 65,9 | 29 | 54 | / | / | / |
| **Exemple 2.3** | 81,8 | 84 | 70,4 | 99,8 | / | / | / |
| **Exemple 2.4** | 50,4 | 88,3 | 54,8 | 105,8 | / | / | / |
| **Exemple 2.5** | 46,2 | 33,8 | 65,8 | 84,4 | / | / | / |

### 3. Oxydation de surface + Greffage d'un film selon le procédé tel que décrit dans la demande internationale WO 2008/078052 [4].

### Exemple 3.1. Oxydation de Fenton (Exemple 1.1) suivi d'un greffage d'un film de PAA par le procédé tel que décrit dans la demande internationale WO 2008/078052 [4] à partir de l'acide 4-aminobenzoïque (Exemple 2.1).

L'exemple a été réalisé selon les modalités décrites dans *l'Exemple 1.1.* Les échantillons préparés ont ensuite été introduits dans le milieu réactionnel décrit dans *l'Exemple 2.1* pour subir un greffage à l'issue duquel ils ont été nettoyés et séchés ainsi que décrit précédemment.

### Exemple 3.2. Oxydation de Fenton (Exemple 1.1) suivi d'un greffage d'un film de PAA par le procédé tel que décrit dans la demande internationale WO 2008/078052 [4] à partir du 1,4-diaminophénylène (Exemple 2.2).

L'exemple a été réalisé selon les modalités décrites dans *l'Exemple 1.1.* Les échantillons préparés ont ensuite été introduits dans le milieu réactionnel décrit dans *l'Exemple 2.2* pour subir un greffage à l'issue duquel ils ont été nettoyés et séchés ainsi que décrit précédemment.

### Exemple 3.3. Oxydation de Fenton (Exemple 1.1) suivi d'un greffage d'un film de PAA par le procédé tel que décrit dans la demande internationale WO 2008/078052 [4] à partir du tétrafluoroborate de 4-nitrobenzène diazonium (Exemple 2.3).

L'exemple a été réalisé selon les modalités décrites dans *l'Exemple 1.1.* Les échantillons préparés ont ensuite été introduits dans le milieu réactionnel décrit dans *l'Exemple 2.3* pour subir un greffage à l'issue duquel ils ont été nettoyés et séchés ainsi que décrit précédemment.

### Exemple 3.4. Oxydation par traitement à la potasse alccolique (Exemple 1.3) suivi d'un greffage d'un film de PAA par le procédé tel que décrit dans la demande internationale WO 2008/078052 [4] à partir de l'acide 4-aminobenzoïque CBD (Exemple 2.1).

L'exemple a été réalisé selon les modalités décrites dans *l'Exemple 1.3.* Les échantillons préparés ont ensuite été introduits dans le milieu réactionnel décrit dans *l'Exemple 2.1* pour subir un greffage à l'issue duquel ils ont été nettoyés et séchés ainsi que décrit précédemment.

### Exemple 3.5. Oxydation par traitement au KMn0₄ (Exemple 1.5) suivi d'un greffage d'un film de PAA par le procédé tel que décrit dans la demande internationale WO 2008/078052 [4] à partir du 1,4-diaminophénylène (Exemple 2.2).

L'exemple a été réalisé selon les modalités décrites dans *l'Exemple 1.5.* Les échantillons préparés ont ensuite été introduits dans le milieu réactionnel décrit dans *l'Exemple 2.2* (2^{nd} mode opératoire) pour subir un greffage à l'issue duquel ils ont été nettoyés et séchés ainsi que décrit précédemment.

### Exemple 3.6. Oxydation par traitement à l'ozone (Exemple 1.4) suivi d'un greffage d'un film de PAA par le procédé tel que décrit dans la demande internationale WO 2008/078052 [4] à partir de l'acide 4-aminobenzoïque (Exemple 2.1).

L'exemple a été réalisé selon les modalités décrites dans *l'Exemple 1.4.* Les échantillons préparés ont ensuite été introduits dans le milieu réactionnel décrit dans *l'Exemple 2.1* pour subir un greffage à l'issue duquel ils ont été nettoyés et séchés ainsi que décrit précédemment.

### Exemple 3.7. Oxydation de Fenton (Exemple 1.1) suivi d'un greffage d'un film de pHEMA par le procédé tel que décrit dans la demande internationale WO 2008/078052 [4] à partir de l'acide 4-aminobenzoïque (Exemple 2.4).

L'exemple a été réalisé selon les modalités décrites dans *l'Exemple 1.1.* Les échantillons préparés ont ensuite été introduits dans le milieu réactionnel décrit dans *l'Exemple 2.4* pour subir un greffage à l'issue duquel ils ont été nettoyés et séchés ainsi que décrit précédemment.

### Exemple 3.8. Oxydation de Fenton (Exemple 1.1) suivi d'un greffage d'un film de p(4-VP) par le procédé tel que décrit dans la demande internationale WO 2008/078052 [4] à partir de l'acide 4-aminobenzoïque (Exemple 2.5).

L'exemple a été réalisé selon les modalités décrites dans *l'Exemple 1.1.* Les échantillons préparés ont ensuite été introduits dans le milieu réactionnel décrit dans *l'Exemple 2.5* pour subir un greffage à l'issue duquel ils ont été nettoyés et séchés ainsi que décrit précédemment.

### Exemple 3.9. Oxydation de KMnO₄/Fenton (Exemple 1.5) suivi d'un greffage d'un film de PAA par le procédé tel que décrit dans la demande internationale WO 2008/078052 [4] à partir du 1,4-diaminophénylène (Exemple 2.2).

L'exemple a été réalisé selon les modalités décrites dans *l'Exemple 1.5.* Les échantillons préparés ont ensuite été introduits dans le milieu réactionnel décrit dans *l'Exemple 2.2* (2^{nd} mode opératoire) pour subir un greffage à l'issue duquel ils ont été nettoyés et séchés ainsi que décrit précédemment.

Les résultats obtenus par mesures d'angles de contact pour les *Exemples 3.1* à *3.9* sont présentés dans le Tableau 4.

**Tableau 4**

| | **ABS** | **ABS/PC** | **PA** | **PP** | **PVDF** | **PC** | **PET** |
|---|---|---|---|---|---|---|---|
| ***Exemple 3.1*** | 56,6 | 52,2 | 88 | 115 | 66,1 | 50 | 18,4 |
| ***Exemple 3.2*** | 36,4 | 24 | 11,2 | 21,6 | / | / | / |
| ***Exemple 3.3*** | 65,8 | 66 | 63,4 | 91,4 | / | / | / |
| ***Exemple 3.4*** | / | / | / | / | 63,5 | / | / |
| ***Exemple 3.5*** | 62,7 | 56,4 | / | / | / | / | / |
| ***Exemple 3.6*** | 90 | 90,6 | 71 | 106,8 | 68 | 43 | 54,6 |
| ***Exemple 3.7*** | 39,6 | 38,4 | 57,8 | 79,6 | / | / | / |
| ***Exemple 3.8*** | 47,4 | 65,2 | 62,8 | 48,4 | / | / | / |
| ***Exemple 3.9*** | 64,2 | 61,6 | / | / | / | / | / |

### 4. Effet de l'oxydation de surface sur la création d'un film de polymère par le procédé tel que décrit dans la demande internationale WO 2008/078052 [4].

### 4.1. Amélioration du pré-traitement oxydant sur le greffage d'un film de PAA par le procédé tel que décrit dans la demande internationale WO 2008/078052 [4].

Un pré-traitement oxydant via une oxydation de Fenton permet d'augmenter le greffage par la méthode telle que décrite dans la demande internationale WO 2008/078052 **[4]** de poly(acide acrylique). Cette augmentation se traduit par une diminution significative de l'angle de contact mesuré pour une goutte déposée sur le support en ABS, ABS/PC, PVDF ou PET, pré-traité puis greffé par le procédé tel que décrit dans la demande internationale WO 2008/078052 **[4]** comparée à une goutte déposée sur un support en ABS, ABS/PC, PVDF ou PET vierge ou un support en ABS, ABS/PC, PVDF ou PET greffé par le procédé tel que décrit dans la demande internationale WO 2008/078052 **[4]** (Figure 1).

Le Tableau 5 ci-après présente l'intensité de la bande C=O caractéristique du poly(acide acrylique) par analyse IR. Cette bande n'est visible qu'après un greffage suite à un pré-traitement oxydant via une oxydation de Fenton selon l'invention.

**Tableau 5**

| | Bande IR ν C=O de l'AA (1706 cm⁻¹), %Transmission |
|---|---|
| PVDF Vierge | 0 %T |
| PVDF + Exemple 1.1 | 0 %T |
| PVDF + Exemple 3.1 | 0,72 %T |

Un pré-traitement oxydant via un traitement à la potasse alcoolique permet d'augmenter le greffage par la méthode telle que décrite dans la demande internationale WO 2008/078052 **[4]** de poly(acide acrylique). Cette augmentation se traduit par une diminution significative de l'angle de contact mesuré pour une goutte déposée sur le support en PVDF pré-traité puis greffé par le procédé tel que décrit dans la demande internationale WO 2008/078052 **[4]** comparée à une goutte déposée sur un support en PVDF vierge ou un support en PVDF greffé par le procédé tel que décrit dans la demande internationale WO 2008/078052 **[4]** (Figure 2).

Le Tableau 6 ci-après présente l'intensité de la bande C=O caractéristique du poly(acide acrylique) par analyse IR. Cette bande n'est visible qu'après un greffage suite à un pré-traitement oxydant via un traitement à la potasse alcoolique selon l'invention.

**Tableau 6**

| | Bande IR ν C=O de l'AA (1706 cm⁻¹), %Transmission |
|---|---|
| PVDF Vierge | 0 %T |
| PVDF + Exemple 1.3 | 0 %T |
| PVDF + Exemple 3.4 | 0,94 %T |

Un pré-traitement oxydant via un traitement à l'ozone permet d'augmenter le greffage par la méthode telle que décrite dans la demande internationale WO 2008/078052 **[4]** de poly(acide acrylique). Cette augmentation se traduit par une diminution significative de l'angle de contact mesuré pour une goutte déposée sur le support en PVDF pré-traité puis greffé par le procédé tel que décrit dans la demande internationale WO 2008/078052 **[4]** comparée à une goutte déposée sur un support en PVDF vierge ou un support en PVDF greffé par le procédé tel que décrit dans la demande internationale WO 2008/078052 **[4]** (Figure 3).

La structure du PET et PC comporte à la base des groupes oxygénés. L'effet d'un pré-traitement à l'ozone est donc plus faible sur ces polymères que sur le PP et le PVDF. Le Tableau 7 ci-après présente l'intensité de la bande C=O caractéristique du poly(acide acrylique) par analyse IR. Cette bande n'est visible qu'après un greffage suite à un pré-traitement oxydant via un traitement à l'ozone selon l'invention.

**Tableau 7**

| | Bande IR ν C=O de l'AA (1710 cm⁻¹), %Transmission |
|---|---|
| PP Vierge | 0 %T |
| PP + Exemple 1.4 | 0 %T |
| PP + Exemple 3.6 | 0, 5 %T |

### 4.2. Amélioration du pré-traitement oxydant sur le greffage d'un film de pHEMA par le procédé tel que décrit dans la demande internationale WO 2008/078052 [4].

Un pré-traitement oxydant via une oxydation de Fenton permet d'augmenter le greffage par la méthode telle que décrite dans la demande internationale WO 2008/078052 **[4]** de pHEMA. Cette augmentation se traduit par une diminution significative de l'angle de contact mesuré pour une goutte déposée sur le support en ABS, ABS/PC ou PP, pré-traité puis greffé par le procédé tel que décrit dans la demande internationale WO 2008/078052 **[4]** comparée à une goutte déposée sur un support en ABS, ABS/PC ou PP vierge ou un support en ABS, ABS/PC ou PP greffé par le procédé tel que décrit dans la demande internationale WO 2008/078052 **[4]** (Figure 4).

### 4.3. Amélioration du pré-traitement oxydant sur le greffage d'un film de p(4-VP) par le procédé tel que décrit dans la demande internationale WO 2008/078052 [4].

Un pré-traitement oxydant via une oxydation de Fenton permet d'augmenter le greffage par la méthode telle que décrite dans la demande internationale WO 2008/078052 **[4]** de p(4-VP). Cette augmentation se traduit par une diminution significative de l'angle de contact mesuré pour une goutte déposée sur le support en PP, pré-traité puis greffé par le procédé tel que décrit dans la demande internationale WO 2008/078052 **[4]** comparée à une goutte déposée sur un support en PP vierge ou un support en PP greffé par le procédé tel que décrit dans la demande internationale WO 2008/078052 **[4]** (Figure 5).

### RÉFÉRENCES

**[1]** Palacin et al., « Molecule-to-metal bonds: Electrografting polymers on conducting surfaces ». Chem. Phys. Chem, 2004. 5(10): 1469-1481.
**[2]** Deniau et al., « Carbon-to-metal bonds : electroreduction of 2-butenenitrile » Surf. Sci. 2006. 600 (3) : 675-684.
**[3]** Demande internationale WO 03/018212 au nom du CEA publiée le 6 mars 2003.
**[4]** Demande internationale WO 2008/078052 au nom du CEA publiée le 3 juillet 2008.
**[5]** Naudin, « Nomenclature, classification et formules chimiques des polymères » Techniques de l'Ingénieur 1995: A3035.
**[6]** Brewis et Dahm, « A review of electrochemical pretreatments of polymers » Intl. J. of Adhesion & Adhesives. 2001. 21: 397-409.
**[7]** Demande internationale WO 2007/042659 au nom d'Alchimer publiée le 19 avril 2007.
**[8]** Zenkiewicz et al., « Effects of electronbeam irradiation on surface oxidation of polymer composites » Applied Surface Science. 2007. 253(22): 8992-8999.
**[9]** Demande internationale WO 2005/033378 au nom du CEA publiée le 14 avril 2005.
**[10]** Demande internationale WO 2006/097611 au nom du CEA publiée le 21 septembre 2006.

## Revendications

1. Procédé de préparation d'un film organique sur une partie de la surface d'un support solide en (co)polymère, **caractérisé en ce qu'**il comprend les étapes successives consistant à :
i) soumettre ladite partie de surface à un traitement oxydant ;
ii) greffer sur ladite partie de surface, par greffage chimique radicalaire, un film organique qui est un (co)polymère principalement issu de plusieurs unités monomères, identiques et/ou différentes, polymérisables par voie radicalaire,
ledit greffage mettant en oeuvre un sel d'aryle diazonium distinct desdits monomères, et
une entité moléculaire, issue dudit sel d'aryle diazonium étant liée par une liaison covalente à ladite surface dudit support solide et par une autre liaison covalente audit film organique.

2. Procédé selon la revendication 1, **caractérisé en ce que** ledit traitement oxydant est un traitement oxydant chimique.

3. Procédé selon la revendication 2, **caractérisé en ce que** ledit traitement oxydant chimique est choisi dans le groupe constitué par une réaction chimique de Fenton, un traitement à la potasse alcoolique, un traitement par un acide fort, un traitement à la soude, un traitement par un oxydant fort, un traitement à l'ozone et leurs combinaisons.

4. Procédé selon la revendication 3, **caractérisé en ce que** ledit oxydant fort est choisi dans le groupe constitué par du KMnO₄, K₂Cr₂0₇, KClO₃, CrO₃ et leurs mélanges, dans l'acide chlorhydrique, l'acide sulfurique ou dans l'acide nitrique.

5. Procédé selon l'une quelconque des revendications 1 à 4, **caractérisé en ce que** ledit traitement oxydant est un traitement oxydant physique.

6. Procédé selon la revendication 5, **caractérisé en ce que** ledit traitement oxydant physique est choisi dans le groupe constitué par un traitement à la flamme, un traitement par l'effet corona, un traitement par plasma, un traitement aux UV, un traitement aux rayons x ou γ, un traitement par irradiation aux électrons ou aux ions lourds et leurs combinaisons.

7. Procédé selon l'une quelconque des revendications précédentes, **caractérisé en ce que** ladite surface dudit support solide est équipée d'un masque.

8. Procédé selon la revendication 1, caractérisé en que le ou les monomères sont choisis parmi les monomères de formule (II) suivante : 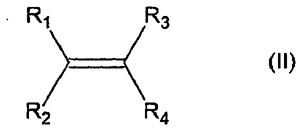 dans laquelle les groupes R₁ à R₄, identiques ou différents, représentent un atome monovalent non métallique tel qu'un atome d'halogène, un atome d'hydrogène, un groupe chimique saturé ou insaturé, tel qu'un groupe alkyle, aryle, un nitrile, un carbonyle, une amine, un amide ou un groupe -COOR₅ dans lequel R₅ représente un atome d'hydrogène ou un groupe alkyle en C₁-C₁₂ et de préférence en C₁-C₆.

9. Procédé selon l'une quelconque des revendications précédentes, **caractérisé en ce que** ladite étape (ii) comprend les étapes suivantes consistant à :
a) ajouter au moins un monomère tel que défini à la revendication 1 ou 8 à une solution contenant au moins un sel d'aryle diazonium clivable différent dudit monomère tel que défini à la revendication 1 en présence d'au moins un solvant,
b) placer la solution obtenue à l'étape (a) dans des conditions non-électrochimiques permettant la formation d'entités radicalaires à partir dudit sel d'aryle diazonium,
c) mettre en contact la surface du support solide avec la solution de l'étape (b).

10. Procédé selon l'une quelconque des revendications 1 à 8, **caractérisé en ce que** ladite étape (ii) comprend les étapes suivantes consistant à :
a') mettre en contact la surface du support solide avec une solution contenant au moins un sel d'aryle diazonium tel que défini à la revendication 1 en présence d'au moins un solvant et, éventuellement d'au moins un monomère distinct dudit sel d'aryle diazonium tel que défini à la revendication 1 ou 8,
b') placer la surface du support solide en contact avec la solution de l'étape (a') dans des conditions non-électrochimiques permettant la formation d'entités radicalaires à partir dudit sel d'aryle diazonium,
c') éventuellement ajouter au moins un monomère distinct dudit sel d'aryle diazonium tel que défini à la revendication 1 ou 8 à la solution obtenue à l'étape (b').

11. Procédé selon la revendication 9 ou 10, **caractérisé en ce que**, lors de l'étape (b) ou (b'), un (ou plusieurs) amorceur(s) chimique(s) tel(s) que de la laine métallique ou de la limaille métallique est(sont) utilisé(s).

## Patentansprüche

1. Verfahren zur Herstellung eines organischen Films auf einem Teil der Oberfläche eines festen (Co)polymersubstrats,
**dadurch gekennzeichnet, dass** es die folgenden Schritte umfasst, darin betstehend :
i) den genannten Oberflächenteil einer Oxidationsbehandlung zu unterziehen ;
ii) auf dem genannten Oberflächenteil durch radikalische chemische Pfropfung einen organischen Film aufpfropfen, der ein hauptsächlich aus mehreren gleichen und/oder verschiedenen, auf radikalischem Wege polymerisierbaren Monomereinheiten entstandenes (Co)polymer ist,
wobei für die genannte Pfropfung ein sich von den genannten Monomeren unterscheidendes Aryldiazoniumsalz benutzt wird, und
wobei eine molekulare Einheit, entstanden aus dem genannten Aryldiazoniumsalz, durch eine kovalente Bindung mit der genannten Oberfläche des genannten festen Substrats und durch eine andere kovalente Bindung mit dem genannten organischen Film verbunden ist.

2. Verfahren nach Anspruch 1, **dadurch gekennzeichnet, dass** die genannte Oxidationsbehandlung eine chemische Oxidationsbehandlung ist.

3. Verfahren nach Anspruch 2, **dadurch gekennzeichnet, dass** die genannte chemische Oxidationsbehandlung ausgewählt wird aus der Gruppe, die gebildet wird durch eine chemische Fenton-Reaktion, eine Behandlung mit alkoholischem Kali, eine Behandlung mit harter Säure, eine Behandlung mit Natriumkarbonat, eine Behandlung mit einem starken Oxidationsmittel, eine Behandlung mit Ozon, und ihre Kombinationen.

4. Verfahren nach Anspruch 3, **dadurch gekennzeichnet, dass** das genannte starke Oxidationsmittel ausgewählt wird aus einer Gruppe, die gebildet wird durch KMnO₄, K₂Cr₂O₇, KClO₃, CrO₃ und ihren Gemischen in Salzsäure, Schwefelsäure oder in Salpetersäure.

5. Verfahren nach einem der Ansprüche 1 bis 4, **dadurch gekennzeichnet, dass** die genannte Oxidationsbehandlung eine physikalische Oxidationsbehandlung ist.

6. Verfahren nach Anspruch 5, **dadurch gekennzeichnet, dass** die genannte physikalische Oxidationsbehandlung ausgewählt wird aus der Gruppe, die gebildet wird durch eine Flammenbehandlung, eine Coronaeffektbehandlung, eine Plasmabehandlung, eine UV-Behandlung, eine Röntgen- oder Gammastrahlenbehandlung, eine Bestrahlungsbehandlung mit Elektronen oder mit schweren Ionen und ihre Kombinationen.

7. Verfahren nach einem der vorhergehenden Ansprüche, **dadurch gekennzeichnet, dass** die genannte Oberfläche des genannten Substrats mit einer Maske versehen ist.

8. Verfahren nach Anspruch 1, **dadurch gekennzeichnet, dass** das Monomer oder die Monomere ausgewählt werden unter den Monomeren der folgenden Formel (II): 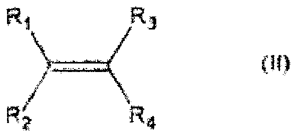 bei der die Gruppen R₁ bis R₄, gleich oder verschieden, darstellen: ein nichtmetallisches monovalentes Atom wie zum Beispiel ein Halogen-Atom, ein Wasserstoff-Atom, eine gesättigte oder ungesättigte chemische Gruppe, zum Beispiel eine Alkyl-, Aryl-, eine Nitril-, eine Carbonyl-, eine Amino-, eine Amid-Gruppe oder eine -COOR₅-Gruppe, bei der R₅ ein Wasserstoffatom darstellt oder eine Alkylgruppe aus C₁-C₁₂ und vorzugsweise aus C₁-C₆.

9. Verfahren nach einem der vorhergehenden Ansprüche, **dadurch gekennzeichnet, dass** der genannte Schritt (ii) die folgenden Schritte umfasst, darin bestehend :
a) Zugeben wenigstens eines Monomers wie definiert in Anspruch 1 oder 8 zu einer Lösung, die wenigstens ein spaltbares Aryldiazoniumsalz enthält, verschieden von dem genannten Monomer wie definiert in Anspruch 1, in Präsenz wenigstens eines Lösungsmittels.
b) Versetzen der in Schritt (a) erhaltenen Lösung in nicht-elektrochemische Zustände, die die Bildung von radikalischen Einheiten aus dem genannten Aryldiazoniumsalz ermöglichen,
c) Herstellen des Kontakts der Oberfläche des festen Substrats mit der Lösung des Schritts (b).

10. Verfahren nach einem der Ansprüche 1 bis 8, **dadurch gekennzeichnet, dass** der genannte Schritt (ii) die folgenden Schritte umfasst, darin bestehend :
a') Herstellen des Kontakts der Oberfläche des festen Substrats mit einer Lösung, die wenigstens ein Aryldiazoniumsalz wie definiert in Anspruch 1 in Präsenz wenigstens eines Lösungsmittels und eventuell wenigstens ein sich von dem genannten Aryldiazoniumsalz unterscheidendes Monomer wie definiert in Anspruch 1 oder 8 enthält, b') Herstellen des Kontakts zwischen der Oberfläche des festen Substrats und der Lösung des Schritts (a') unter nicht-elektrochemischen Zuständen, die die Bildung von radikalischen Einheiten aus dem genannten Aryldiazoniumsalz ermöglichen,
c') eventuelles Zugeben wenigstens eines sich von dem genannten Aryldiazoniumsalz unterscheidenden Monomers wie definiert in Anspruch 1 oder 8 zu der in Schritt (b') erhaltenen Lösung.

11. Verfahren nach Anspruch 9 oder 10, **dadurch gekennzeichnet, dass** in Schritt (b) oder (b') ein (oder mehrere) chemischer (chemische) Initiator(en) wie zum Beispiel Metallwolle oder Metallspäne benutzt wird (werden).

## Claims

1. Process for the preparation of an organic film on a portion of the surface of a solid support made of (co)polymer, **characterized in that** it comprises the successive steps consisting in:
i) subjecting said surface portion to an oxidizing treatment;
ii) grafting an organic film to said surface portion by radical chemical grafting, organic film which is a (co)polymer mainly resulting from several identical and/or different monomer units,
said grafting implementing an aryldiazonium salt distinct from these monomers, and
a molecular entity resulting from said aryldiazonium salt is bonded by one covalent bond to said surface of said solid support and by another covalent bond to said organic film.

2. Process according to Claim 1, charactereized in that said oxidizing treatment is a chemical oxidizing treatment.

3. Process according to Claim 2, **characterized in that** said chemical oxidizing treatment is chosen from the group consisting of a Fenton chemical reaction, a treatment with alcoholic caustic potash, a treatment with a strong acid, a treatment with sodium hydroxide, a treatment with a strong oxidizing agent, a treatment with ozone and combinations thereof.

4. Process according to Claim 3, **characterized in that** said strong oxidizing agent is chosen from the group consisting of KMnO₄, K₂Cr₂O₇, KClO₃, CrO₃ and mixtures thereof, in hydrochloric acid, sulfuric acid or nitric acid.

5. Process according to any one of Claims 1 to 4, **characterized in that** said oxidizing treatment is a physical oxidizing treatment.

6. Process according to Claim 5, **characterized in that** said physical oxidizing treatment is chosen from the group consisting of a flame treatment, a treatment by the corona effect, a plasma treatment, a treatment with UV radiation, a treatment with X- or γ-rays, a treatment by irradiation with electrons or with heavy ions, and combinations thereof.

7. Process according to any one of the preceding claims, **characterized in that** said surface of said solid support is equipped with a mask.

8. Process according to Claim 1, **characterized in that** the monomer or monomers are chosen from monomers of following formula (II): 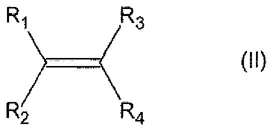 in which the R₁ to R₄ groups, which are identical or different, represent a monovalent nonmetallic atom, such as a halogen atom or a hydrogen atom, or a saturated or unsaturated chemical group, such as an alkyl or aryl group, a nitrile, a carbonyl, an amine, an amide or a -COOR₅ group in which R₅ represents a hydrogen atom or a C₁-C₁₂ and preferably C₁-C₆ alkyl group.

9. Process according to any one of the preceding claims, **characterized in that** said step (ii) comprises the following steps consisting in:
a) adding at least one monomer as defined in Claim 1 or 8 to a solution comprising at least one cleavable aryldiazonium salt other than said monomer as defined in Claim 1 in the presence of at least one solvent,
b) placing the solution obtained in step (a) under nonelectrochemical conditions which make possible the formation of radical entities from said aryldiazonium salt,
c) bringing the surface of the solid support into contact with the solution of step (b).

10. Process according to any one of Claims 1 to 8, **characterized in that** said step (ii) comprises the following steps consisting in:
a') bringing the surface of the solid support into contact with a solution comprising at least one aryldiazonium salt as defined in Claim 1 in the presence of at least one solvent and optionally of at least one monomer distinct from said aryldiazonium salt as defined in Claim 1 or 8,
b') placing the surface of the solid support in contact with the solution of step (a') under nonelectrochemical conditions which make possible the formation of radical entities from said aryldiazonium salt,
c') optionally adding at least one monomer distinct from said aryldiazonium salt as defined in Claim 1 or 8 to the solution obtained in step (b').

11. Process according to Claim 9 or 10, **characterized in that**, during step (b) or (b'), one (or more) chemical initiator(s), such as metal wool or metal filings, is (are) used.
